(19)

Europäisches
Patentamt
European
Patent Office
Office européen
des brevets

(11) **EP 1 764 738 A1**

(12) **EUROPEAN PATENT APPLICATION**
published in accordance with Art. 158(3) EPC

(43) Date of publication:
**21.03.2007 Bulletin 2007/12**

(21) Application number: **05757820.5**

(22) Date of filing: **06.07.2005**

(51) Int Cl.:
*G06T 5/00* (2006.01)　　*H04N 5/21* (2006.01)
*H04N 9/07* (2006.01)

(86) International application number:
**PCT/JP2005/012478**

(87) International publication number:
**WO 2006/004151 (12.01.2006 Gazette 2006/02)**

(84) Designated Contracting States:
**DE FR GB**

(30) Priority: **07.07.2004 JP 2004201091**

(71) Applicant: **Olympus Corporation**
**Tokyo 151-0072 (JP)**

(72) Inventor: **TSURUOKA, T.,**
**OLYMPUS INT. PROP. SERVICES CO. LTD.**
**Hachioji-shi,**
**Tokyo 1928512 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **SIGNAL PROCESSING SYSTEM AND SIGNAL PROCESSING PROGRAM**

(57)   A signal processing system for performing noise reduction processing on signals from an image pickup device 103 in front of which is arranged a color filter, wherein a local region formed by a target region regarding which noise reduction processing is performed, and at least one or more nearby regions which exist neighborhood of the target region; are extracted by an extracting unit 112, signals are separated into luminance signals and color difference signals by a Y/C separating unit 113, the nearby regions similar to the target region are selected by a selecting unit 114, the amount of noise from the target region and the selected nearby regions is estimated by a noise estimating unit 115, and noise in the target region is reduced by a noise reduction unit 116.

**FIG.1**

EP 1 764 738 A1

## Description

Technical Field

The present invention relates to processing for random noise reduction in color signals and luminance signals due to an image pickup device system, and further relates to a signal processing system and a signal processing program which reduce only noise components with high precision by dynamically estimating the amount of noise generated, without any influence of shooting conditions.

Background Art

Noise components included in digitized signals obtained from an image pickup device and an analog circuit and an A/D converter associated with the image pickup device can be generally classified in to fixed pattern noise and random noise. The fixed pattern noise is noise that originates primarily in the image pickup device, and is typified by defective pixels or the like. On the other hand, random noise is generated in the image pickup device and analog circuit, and has characteristics close to white noise properties. With regard to random noise, for example, Japanese Unexamined Patent Application Publication No. 2001-157057 discloses a technique wherein the amount of luminance noise is converted into a function as to the signal level, the amount of luminance noise as to the signal level is estimated from this function, and the filtering frequency properties are controlled based on the amount of luminance noise. Thus, appropriate noise reduction processing can be performed on the signal level.

Also, Japanese Unexamined Patent Application Publication No. 2001-175843 discloses a technique wherein input signals are divided into luminance and color difference signals, edge intensity is obtained from the luminance signals and color difference signals, and smoothing processing of color difference signals is performed at regions other than the edge portion. Thus, color noise reduction processing is performed at smooth portions.

With Japanese Unexamined Patent Application Publication No. 2001-157057, conversion to a function has been performed with $N = ad^{cD}$ wherein N represents the amount of luminance noise and D represents the signal level converted in to density value. Here, a, b, and c are constant terms, allocated statically. However, the amount of luminance noise changes dynamically according to factors such as the temperature, exposure time and gain for each shooting operation and so forth. Accordingly, there is the problem that formulization cannot be carried out handling the amount of noise at each shooting operation, so the estimation precision of the amount of noise deteriorates. Also, filtering frequency properties are controlled from the amount of noise, but this filtering is performed equally on both smooth portions and edge portions, with no discernment therebetween. Accordingly, edge portions which are at regions which have been estimated to have a great amount of noise based on the signal level, deteriorate. That is to say, this processing cannot handle discerning between original signals and noise, so there is the problem that preservation of original signals is poor. Moreover, there is the problem that color noise occurring between the color signals cannot be handled.

Also, with Japanese Unexamined Patent Application Publication No. 2001-175843, smoothing processing is performed on color difference signals at smooth regions other than edge portions, but this smoothing processing is performed in a fixed manner. However, the amount of color noise differs according to the signal level, so smoothing processing cannot be optimally controlled. Accordingly, residual color noise components and deterioration in original signals occur.

The present invention has been made in light of the above-described problems, and accordingly it is an object thereof to provide a signal processing system and a signal processing program wherein modeling is performed for the amount of noise of color signals and luminance signals corresponding to not only signal level but also to factors which dynamically change, such as temperature at each shooting operation, gain, and so forth, thereby enabling noise reduction processing optimized for shooting conditions. It is also an object thereof to provide a signal processing system and a signal processing program wherein noise reduction processing is independently performed on both luminance noise and color noise, thereby realizing high-precision reduction of both noises, and generating high-quality signals.

Disclosure of Invention

Means for Solving the Problems

The following is a description regarding the configuration, corresponding embodiments, application examples, operations, and advantages of the signal processing system according to the present invention.

A signal processing system according to the present invention, for performing noise reduction processing on signals from an image pickup device in front of which is arranged a color filter, comprises: extracting means for extracting a local region, from the signals, formed by a target region which noise reduction processing is performed, and at least one or more nearby regions which exist neighborhood of the target region; separating means for calculating luminance signals and color difference signals for each of the target region and the nearby regions; selecting means for selecting the nearby regions similar to the target region; noise estimating means for estimating the amount of noise from the target region and the nearby region selected by the selecting means; and noise reduction means for reducing noise in the target region based on the amount of noise.

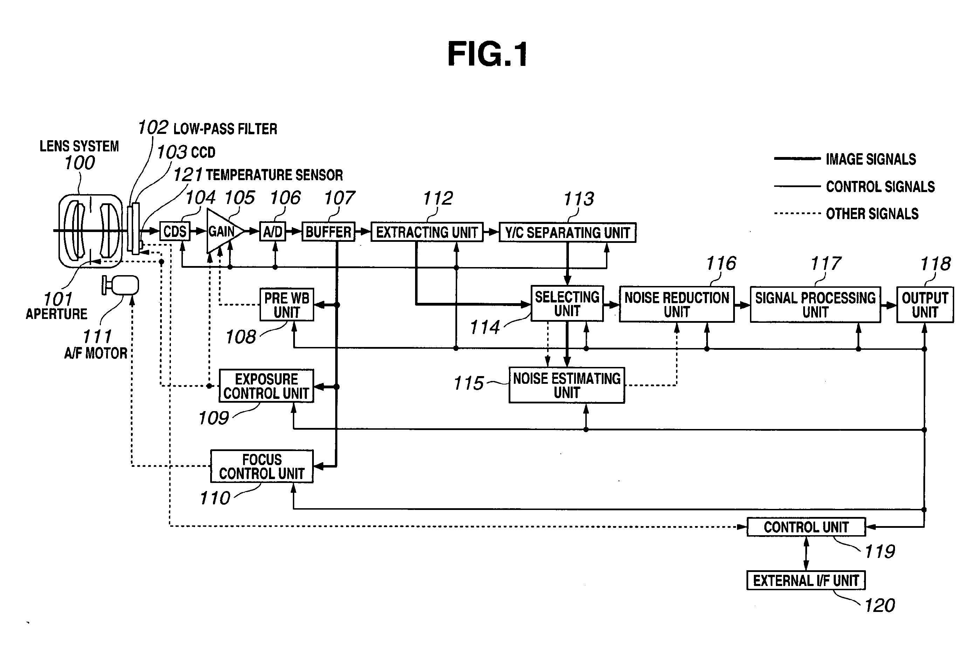

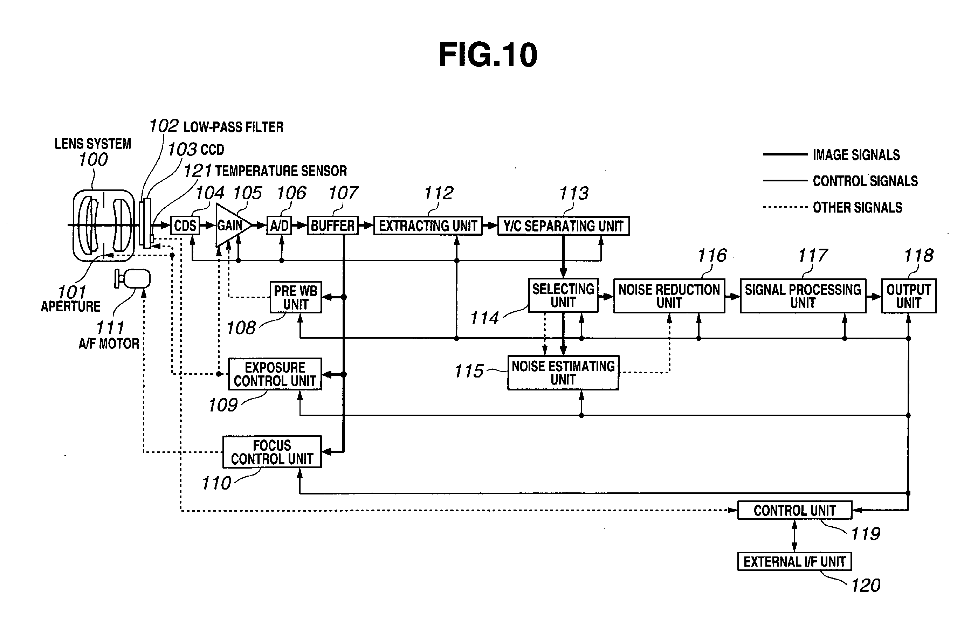

Embodiments corresponding to this invention are Embodiment 1 shown in Fig. 1 through Fig. 9, and Embodiment 2 shown in Fig. 10 through Fig. 15. An extracting unit 112 shown in Fig. 1, Fig. 8, and Fig. 10 corresponds to the extracting means, a Y/C separating unit 113 shown in Fig. 1, Fig. 8, and Fig. 10 corresponds to the separating means, a selecting unit 114 shown in Fig. 1, Fig. 3, Fig. 8, Fig. 10, Fig. 12, and Fig. 13 corresponds to the selecting means, a noise estimating unit 115 shown in Fig. 1, Fig. 5, Fig. 8, Fig. 10, and Fig. 14 corresponds to the noise estimating means, and a noise reduction unit 116 shown in Fig. 1, Fig. 7, Fig. 8, and Fig. 10 corresponds to the noise reduction means.

A preferable application of this invention is a signal processing system wherein a local region formed by a target region which noise reduction processing is performed, and at least one or more nearby regions which exist neighborhood of the target region, are extracted by the extracting unit 112; signals are separated into luminance signals and color difference signals by the Y/C separating unit 113; nearby regions similar to the target region are selected by the selecting unit 114; the amount of noise from the target region and the selected nearby region is estimated by the noise estimating unit 115; and noise is reduced in the target region by the noise reduction unit 116.

According to this invention, a nearby region similar to the target region regarding which noise reduction processing is to be performed is selected, the amount of noise is estimated for each of the target region and the nearby region, and noise reduction processing is performed according to the estimated noise amount, so high-precision noise amount estimation and optimal noise reduction can be made throughout the entire image, thereby yielding high-precision signals.

In the present invention, the image pickup device is a single image sensor in front of which is arranged a Bayer (hereafter written as "Bayer") type primary color filter constituted of R (red), G (green), and B (blue), or a single image sensor in front of which is arranged a color difference line sequential type complementary color filter constituted of Cy (cyan), Mg (magenta), Ye (yellow), and G (green).

Embodiments corresponding to this invention are Embodiment 1 shown in Fig. 1 through Fig. 9, and Embodiment 2 shown in Fig. 10 through Fig. 15.

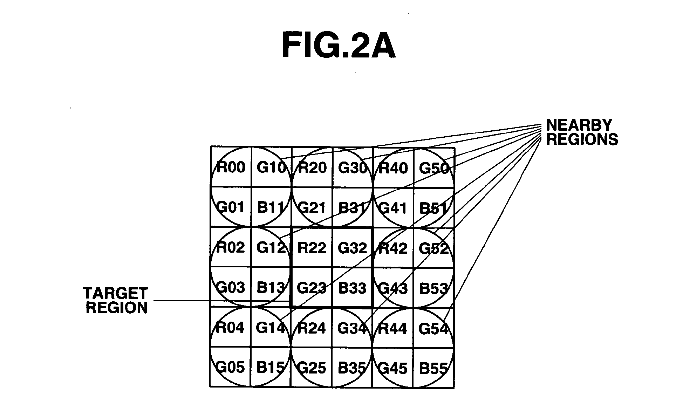

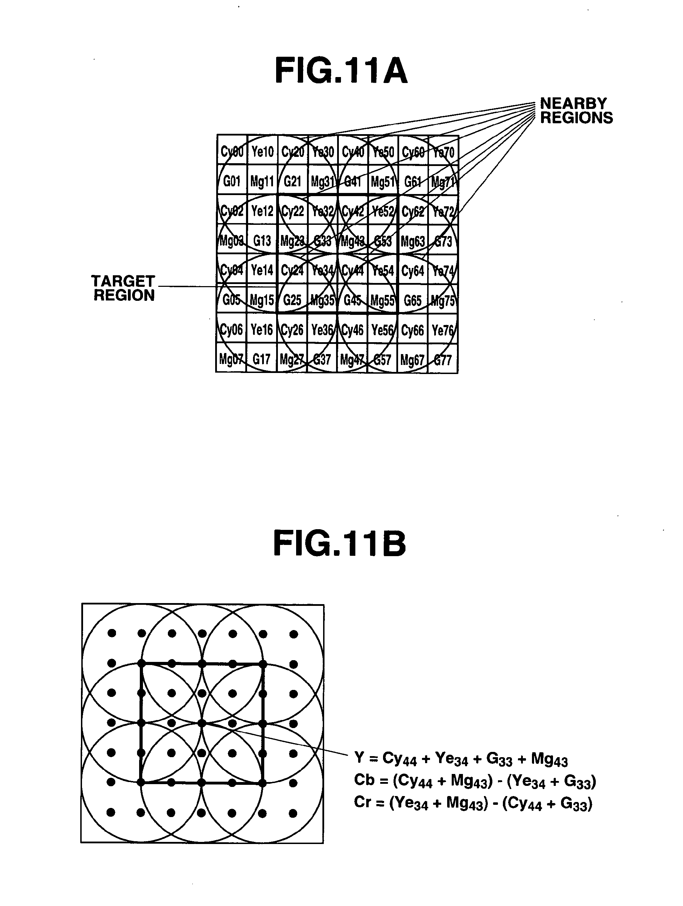

A preferable application example of this invention is a signal processing system wherein a Bayer type primary color filter shown in Fig. 2A or a color difference line sequential type complementary color filter shown in Fig. 11A is arranged in front of an image pickup device.

According to this invention, noise reduction processing is performed according to a Bayer or color difference line sequential type color filter placement, so high-speed processing can be realized.

In the present invention, the target region and nearby regions are regions including at least one set or more color filters necessary for calculating the luminance signals and the color difference signals.

Embodiments corresponding to this invention are Embodiment 1 shown in Fig. 1 through Fig. 9, and Embodiment 2 shown in Fig. 10 through Fig. 15.

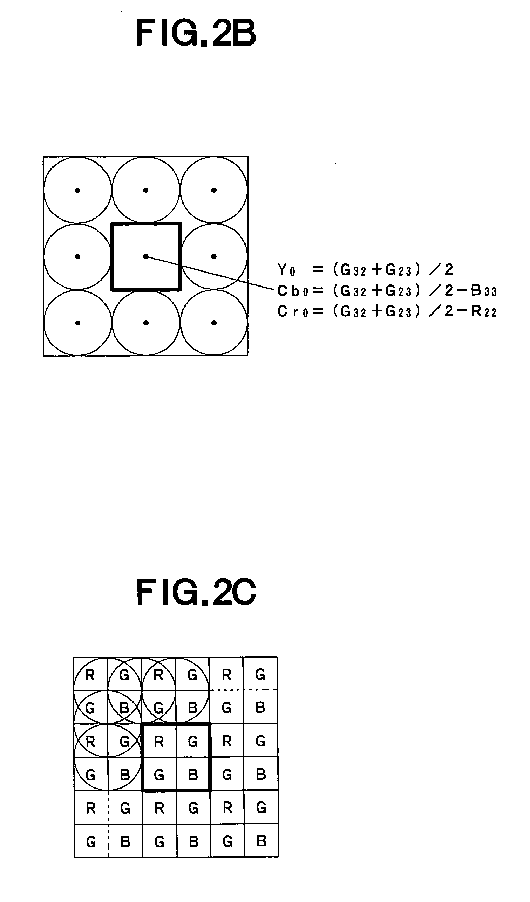

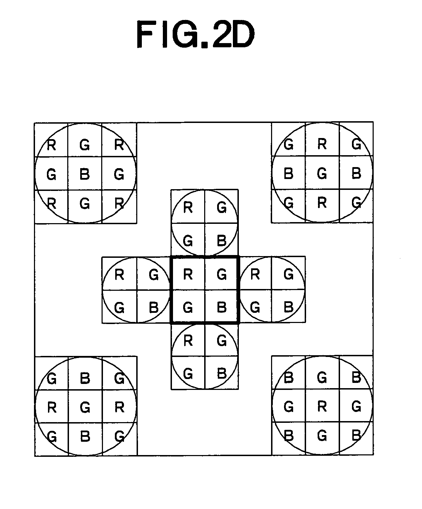

A preferable application example of this invention is a signal processing system using the target region and nearby regions shown in Fig. 2A, Fig. 2C, Fig. 2D, and Fig. **11A.**

According to this invention, luminance signals and color difference signals can be calculated at each of the target region where noise reduction processing is performed and nearby regions where the amount of noise is estimated, so estimation of noise amount can be made using a larger area, and the precision of estimation can be improved.

In the present invention, the selecting means comprise: hue calculating means for calculating hue signals for each of the target region and the nearby regions; similarity determining means for determining a similarity of the target region and the nearby regions based on at least one of the luminance signals and the hue signals; and nearby region selecting means for selecting the nearby regions based on the similarity.

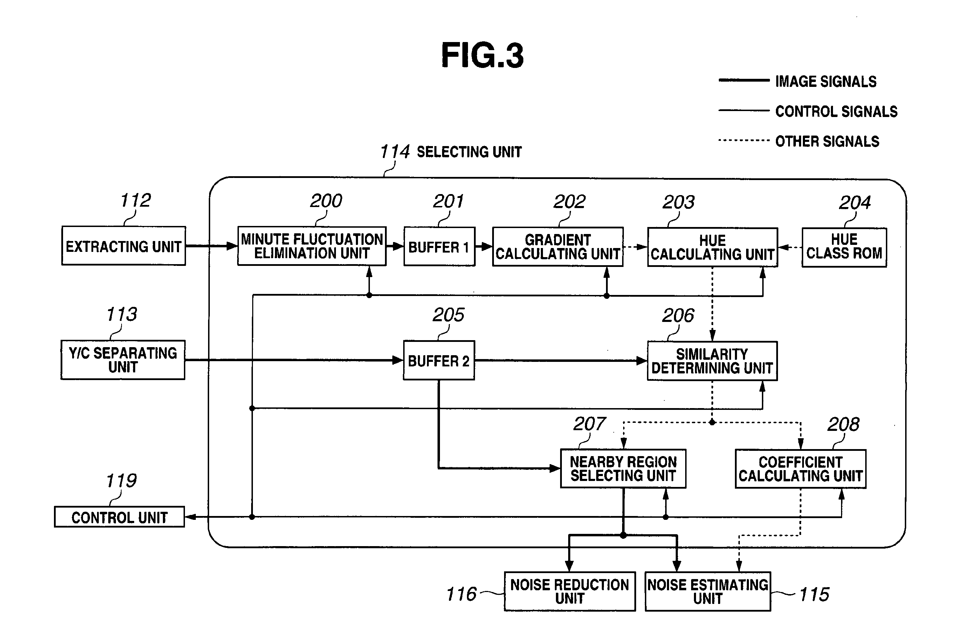

Embodiments corresponding to this invention are Embodiment 1 shown in Fig. 1 through Fig. 9, and Embodiment 2 shown in Fig. 10 through Fig. 15. A hue calculating unit 203 shown in Fig. 3, Fig. 12, and Fig. 13 corresponds to the hue calculating means, a similarity determining unit 206 shown in Fig. 3, Fig. 12, and Fig. 13 corresponds to the similarity determining means, and a nearby region selecting unit 207 shown in Fig. 3, Fig. 12, and Fig. 13 corresponds to the nearby region selecting means.

A preferable application example of this invention is a signal processing system wherein hue signals are calculated for each of the target region and the nearby regions by the hue calculating unit 203; the similarity of the target region and the nearby regions is determined by the similarity determining unit 206 based on at least one of the luminance signals and the hue signals; and nearby regions similar to the target region are selected by the nearby region selecting unit 207.

According to this invention, nearby regions similar to the target region are extracted based on at least one of the luminance signals and hue signals, so noise amount estimation can be made from uniform regions, and estimation precision improves. Also, calculation of the luminance signals and hue signals is easy, so a high-speed and low-cost system can be provided.

With the present invention, the selecting means comprise: hue calculating means for calculating hue signals for each of the target region and the nearby regions; edge calculating means for calculating edge signals for each of the target region and the nearby regions; similarity determining means for determining the similarity of the target region and the nearby regions based on at least one of the luminance signals and the hue signals and the edge signals; and nearby region selecting means for selecting the nearby regions based on the similarity.

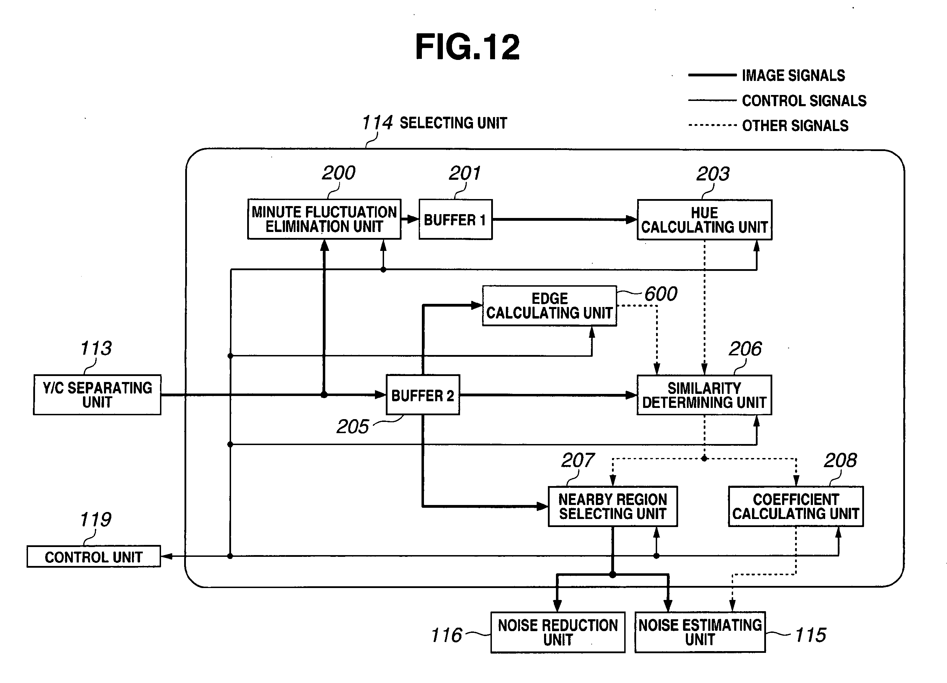

An embodiment corresponding to this invention is Embodiment 2 shown in Fig. 10 through Fig. 15. The hue calculating unit 203 shown in Fig. 12 corresponds to the hue calculating means, an edge calculating unit 600 shown in Fig. 12 corresponds to the edge calculating means, the similarity determining unit 206 shown in Fig. 12 corresponds to the similarity determining means, and the nearby region selecting unit 207 shown in Fig. 12 corresponds to the nearby region selecting means.

A preferable application example of this invention is a signal processing system wherein hue signals are calculated for each of the target region and the nearby regions by the hue calculating unit 203; edge signals are calculated at the edge calculating unit 600; the similarity of the target region and the nearby regions is determined by the similarity determining unit 206 based on at least one of the luminance signals and the hue signals and the edge signals; and nearby regions similar to the target region are selected by the nearby region selecting unit 207.

According to this invention, nearby regions similar to the target region are extracted based on at least one of the luminance signals and hue signals and edge signals, so noise amount estimation can be made from uniform regions, and estimation precision improves. Also, calculation of the luminance signals and hue signals and edge signals is easy, so a high-speed and low-cost system can be provided.

With the present invention, the selecting means comprise: hue calculating means for calculating hue signals for each of the target region and the nearby regions; frequency calculating means for calculating frequency signals for each of the target region and the nearby regions; similarity determining means for determining the similarity of the target region and the nearby regions based on at least one of the luminance signals and the hue signals and the frequency signals; and nearby region selecting means for selecting the nearby regions based on the similarity.

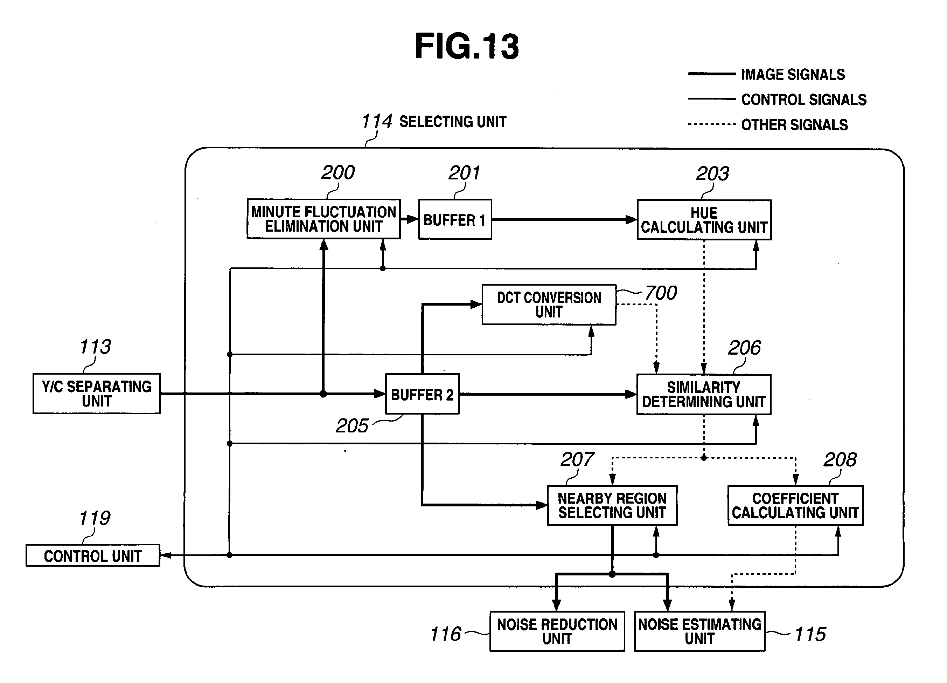

An embodiment corresponding to this invention is Embodiment 2 shown in Fig. 10 through Fig. 15. The hue calculating unit 203 shown in Fig. 13 corresponds to the hue calculating means, a DCT conversion unit 700 shown in Fig. 13 corresponds to the frequency calculating means, the similarity determining unit 206 shown in Fig. 13 corresponds to the similarity determining means, and the nearby region selecting unit 207 shown in Fig. 13 corresponds to the nearby region selecting means.

A preferable application example of this invention is a signal processing system wherein hue signals are calculated for each of the target region and the nearby regions by the hue calculating unit 203; frequency signals are calculated at the DCT conversion unit 700; the similarity of the target region and the nearby regions is determined by the similarity determining unit 206 based on at least one of the luminance signals and the hue signals and the frequency signals; and nearby regions similar to the target region are selected by the nearby region selecting unit 207.

According to this invention, nearby regions similar to the target region are extracted based on at least one of the luminance signals and hue signals and frequency signals, so noise amount estimation can be made from uniform regions, and estimation precision improves. Also, selection based on frequency signals enables verification of similarity to be performed with higher precision.

With the present invention, the selecting means comprise control means for controlling such that the nearby regions used by the noise estimating means and the noise reduction means differ.

Embodiments corresponding to this invention are Embodiment 1 shown in Fig. 1 through Fig. 9, and Embodiment 2 shown in Fig. 10 through Fig. 15. A control unit 119 shown in Fig. 1, Fig. 8, and Fig. 10 corresponds to the control means.

A preferable application example of this invention is a signal processing system wherein the control unit 119 controls such that the nearby regions used by the noise estimating unit 115 and the noise reduction unit 116 differ, with regard to the target region and nearby regions obtained by the extracting unit 112 and the selecting unit 114.

According to this invention, control is effected such that a few nearby regions are used with the noise estimating means and many nearby regions are used with the noise reduction means, so the precision of noise estimation processing is raised by performing estimation from a narrow region, and the effectiveness of noise reduction processing is improved by reducing from a wide region. Region sizes can be set adaptive for each processing, so signals with higher quality can be obtained.

With the present invention, the selecting means comprise elimination means for eliminating predetermined minute fluctuations from the signals of the target region and the nearby regions.

Embodiments corresponding to this invention are Embodiment 1 shown in Fig. 1 through Fig. 9, and Embodiment 2 shown in Fig. 10 through Fig. 15. A minute fluctuation elimination unit 200 shown in Fig. 3, Fig. 12, and Fig. 13 corresponds to the elimination means.

A preferable application example of this invention is a signal processing system wherein minute fluctuations are eliminated from the signals of the target region and the nearby regions by the minute fluctuation elimination unit 200.

According to this invention, hue signals are obtained following eliminating minute fluctuations from the signals, so the stability of hue signals improves, and nearby regions can be extracted with higher precision.

With the present invention, the selecting means comprises coefficient calculating means for calculating weighting coefficients for the nearby regions based on the similarity.

Embodiments corresponding to this invention are Embodiment 1 shown in Fig. 1 through Fig. 9, and Embodiment 2 shown in Fig. 10 through Fig. 15. A coefficient calculating unit 208 shown in Fig. 3, Fig. 12, and Fig. 13 corresponds to the coefficient calculating means.

A preferable application example of this invention is a signal processing system wherein weighting coefficients are calculated by the coefficient calculating unit 208, based on the similarity of the target region and the nearby regions.

According to this invention, weighting coefficients are calculated based on the similarity of the nearby regions, so similarity with the target region can be employed in multiple stages, and high-precision noise estimation can be performed.

With the present invention, the noise estimating means comprises at least one of color noise estimating means for estimating the amount of color noise from the target region and the nearby regions selected by the selecting means, and luminance noise estimating means for estimating the amount of luminance noise from the target region and the nearby regions selected by the selecting means.

Embodiments corresponding to this invention are Embodiment 1 shown in Fig. 1 through Fig. 9, and Embodiment 2 shown in Fig. 10 through Fig. 15. A noise estimating unit 115 shown in Fig. 1, Fig. 5, Fig. 8, Fig. 10 and Fig. 14 corresponds to the color noise estimating means, and the noise estimating unit 115 shown in Fig. 1, Fig. 5, Fig. 8, Fig. 10 and Fig. 14 corresponds to the luminance noise estimating means.

A preferable application example of this invention is a signal processing system wherein at least one of the amount of color noise and the amount of luminance noise is estimated by the noise estimating unit 115.

According to this invention, the color noise amount and the luminance noise amount can be independently estimated, whereby the estimation of each can be improved.

With the present invention, the color noise estimating means comprises: collecting means for collecting information relating to temperature values of the image pickup device and gain value corresponding to the signals; assigning means for assigning standard values for information which cannot be obtained by the collecting means; average color difference calculating means for calculating average color difference values from the target region and the nearby regions selected by the selecting means; and color noise amount calculating means for calculating the amount of color noise, based on the information from the collecting means or assigning means, and the average color difference values.

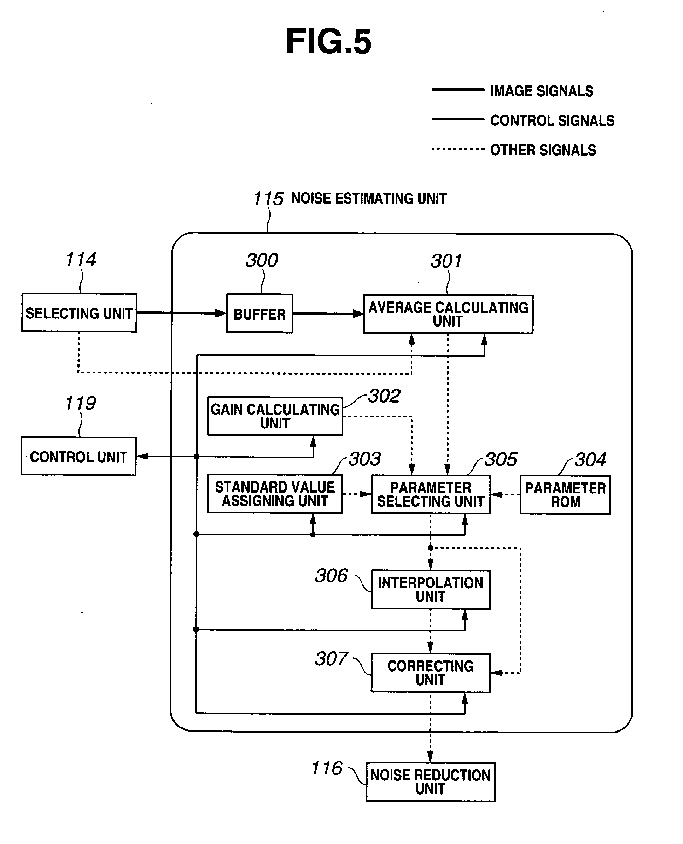

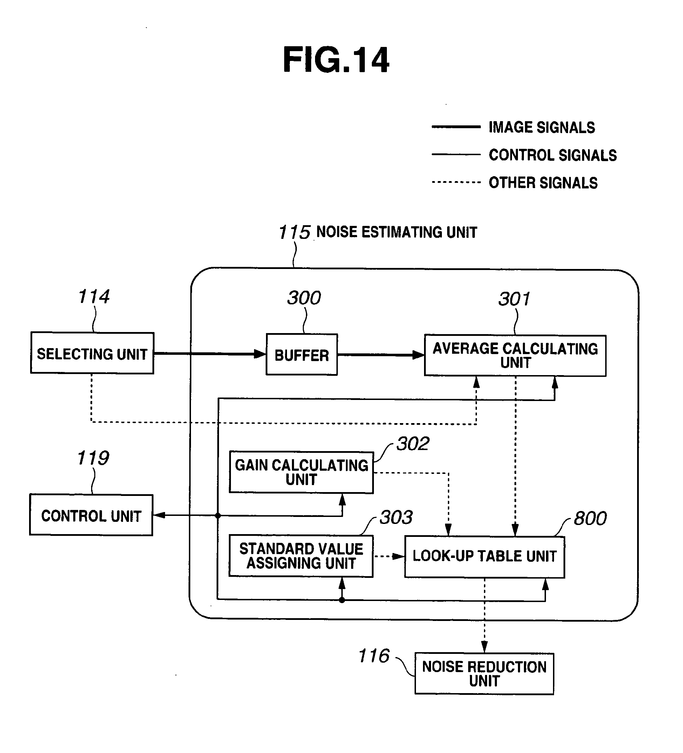

Embodiments corresponding to this invention are Embodiment 1 shown in Fig. 1 through Fig. 9, and Embodiment 2 shown in Fig. 10 through Fig. 15. A temperature sensor 121 and control unit 119 shown in Fig. 1 and Fig. 10, and a gain calculating unit 302 shown in Fig. 5 and Fig. 14, correspond to the collecting means, a standard value assigning unit 303 shown in Fig. 5 and Fig. 14 corresponds to the assigning means, an average calculating unit 301 shown in Fig. 5 and Fig. 14 corresponds to the average color difference calculating means, and a parameter ROM 304, parameter selecting unit 305, interpolation unit 306, correcting unit 307, shown in Fig. 5, and a look-up table unit 800 shown in Fig. 14, correspond to the color noise amount calculating means.

A preferable application example of this invention is a signal processing system wherein information used for noise amount estimation is collected with the temperature sensor 121, control unit 119, and gain calculating unit 302, a standard value is set by the standard value assigning unit 303 in the case that information from the temperature sensor 121, control unit 119, and gain calculating unit 302 cannot be obtained, an average color different value is calculated by the average calculating unit 301 from the target region and nearby regions, and the amount of noise is obtained by the parameter ROM 304, parameter selecting unit 305, interpolation unit 306, correcting unit 307, or the look-up table unit 800.

According to this invention, various types of information relating to the amount of noise is dynamically obtained for each shooting operation, and a standard value is set for information which is not obtained, and color noise amount is calculated from this information, so high-precision color noise amount estimation can be performed while dynamically adapting to different conditions for each shooting operation. Also, the amount of color noise can be estimated even in the case that necessary information cannot be obtained, thereby stable noise reduction effects are obtained.

With the present invention, the luminance noise estimating means comprises: collecting means for collecting information relating to temperature values of the image pickup device and gain value corresponding to the signals; assigning means for assigning standard values for information which cannot be obtained by the collecting means; average luminance calculating means for calculating average luminance values from the target region and the nearby regions selected by the selecting means; and luminance noise amount calculating means for calculating the amount of luminance noise, based on the information from the collecting means or assigning means, and the average luminance values.

Embodiments corresponding to this invention are Embodiment 1 shown in Fig. 1 through Fig. 9, and Embodiment 2 shown in Fig. 10 through Fig. 15. The temperature sensor 121 and control unit 119 shown in Fig. 1 and Fig. 10, and the gain calculating unit 302 shown in Fig. 5 and Fig. 14, correspond to the collecting means, the standard value assigning unit 303 shown in Fig. 5 and Fig. 14 corresponds to the assigning means, the average calculating unit 301 shown in Fig. 5 and Fig. 14 corresponds to the average luminance calculating means, and the parameter ROM 304, parameter selecting unit 305, interpolation unit 306, correcting unit 307, shown in Fig. 5, and the look-up table unit 800 shown in Fig. 14, correspond to the luminance noise amount calculating means.

A preferable application example of this invention is a signal processing system wherein information used for noise amount estimation is collected with the temperature sensor 121, control unit 119, and gain calculating unit 302, a standard value is set by the standard value assigning unit 303 in the case that information from the temperature sensor 121, control unit 119, and gain calculating unit 302 cannot be obtained, an average luminance value is calculated by the average calculating unit 301 from the target region and nearby regions, and the amount of luminance noise is obtained by the parameter ROM 304, parameter selecting unit 305, interpolation unit 306, correcting unit 307, or the look-up table unit 800.

According to this invention, various types of information relating to the amount of noise is dynamically obtained for each shooting operation, and a standard value is applied for information which is not obtained, and luminance noise amount is calculated from this information, so high-precision luminance noise amount estimation can be performed while dynamically adapting to different conditions for each shooting operation. Also, the amount of luminance noise can be estimated even in the case that necessary information cannot be obtained, thereby stable noise reduction effects are obtained.

With the present invention, the collecting means comprise a temperature sensor for measuring the temperature value of the image pickup device.

Embodiments corresponding to this invention are Embodiment 1 shown in Fig. 1 through Fig. 9, and Embodiment 2 shown in Fig. 10 through Fig. 15. The temperature sensor 121 shown in Fig. 1 and Fig. 10 corresponds to the temperature sensor.

A preferable application example of this invention is a signal processing system wherein the temperature of the CCD 103 is measured in real-time by the temperature sensor 121.

According to this invention, the temperature of the image pickup device at each shooting operation is measured, and used as information for noise amount estimation, thereby enabling high-precision noise amount estimation to be performed while dynamically adapting to temperature change at each shooting operation.

With the present invention, the collecting means comprise gain calculating means for obtaining the gain value, based on at least one or more information of ISO sensitivity, exposure information, and white balance information.

Embodiments corresponding to this invention are Embodiment 1 shown in Fig. 1 through Fig. 9, and Embodiment 2 shown in Fig. 10 through Fig. 15. The gain calculating unit 302 and the control unit 119 shown in Fig. 5 and Fig. 14 correspond to the gain calculating means.

A preferable application example of this invention is a signal processing system wherein ISO sensitivity, exposure information, white balance information, and so forth, is transferred at the control unit 119, and the total gain amount at each shooting operation is obtained by the gain calculating unit 302.

According to this invention, the gain value at each shooting operation is obtained based on ISO sensitivity, exposure information, and white balance information, and this is taken as information for estimating the amount of noise, thereby enabling high-precision noise amount estimation to be performed while dynamically adapting to gain change at each shooting operation.

With the present invention, the color noise amount calculating means comprise: recording means for recording at least one set or more of parameter groups constructed of a reference color noise model corresponding to a predetermined hue and a correction coefficient; parameter selecting means for selecting a necessary parameter from the parameter group, based on information from the collecting means or the assigning means, and the average color difference value; interpolation means for obtaining reference color noise amount by interpolation computation based on the average color difference value and a reference color noise model from a parameter group selected by the parameter selecting means; and correcting means for obtaining the color noise amount by correcting the reference color noise amount based on a correction coefficient from the parameter group selected by the parameter selecting means.

An embodiment corresponding to this invention is Embodiment 1 shown in Fig. 1 through Fig. 9. The parameter ROM 304 shown in Fig. 5 corresponds to the recording means, the parameter selecting unit 305 shown in Fig. 5 corresponds to the parameter selecting means, the interpolation unit 306 shown in Fig. 5 corresponds to the interpolation means, and the correcting unit 307 shown in Fig. 5 corresponds to the correcting means.

A preferable application example of this invention is a signal processing system wherein a coefficient and a correction coefficient of a reference color noise model, used for noise amount estimation, measured beforehand, are recorded in the parameter ROM 304; the coefficient and correction coefficient of the reference color noise model are selected by the parameter selecting unit 305, the reference color noise amount is calculated by the interpolation unit 306 by interpolation processing based on the reference color noise model; and the color noise amount is obtained by the correcting unit 307 by correcting the reference color noise amount based on the correction coefficient.

According to this invention, the amount of color noise is obtained by interpolation and correction processing being performed based on the reference color noise model, so high-precision noise amount estimation is enabled. Also, implementation of interpolation and correction processing is easy, and a low-cost system can be provided.

With the present invention, the reference color noise model is configured of a plurality of coordinate point data constructed of color noise amount as to color difference value.

An embodiment corresponding to this invention is Embodiment 1 shown in Fig. 1 through Fig. 9.

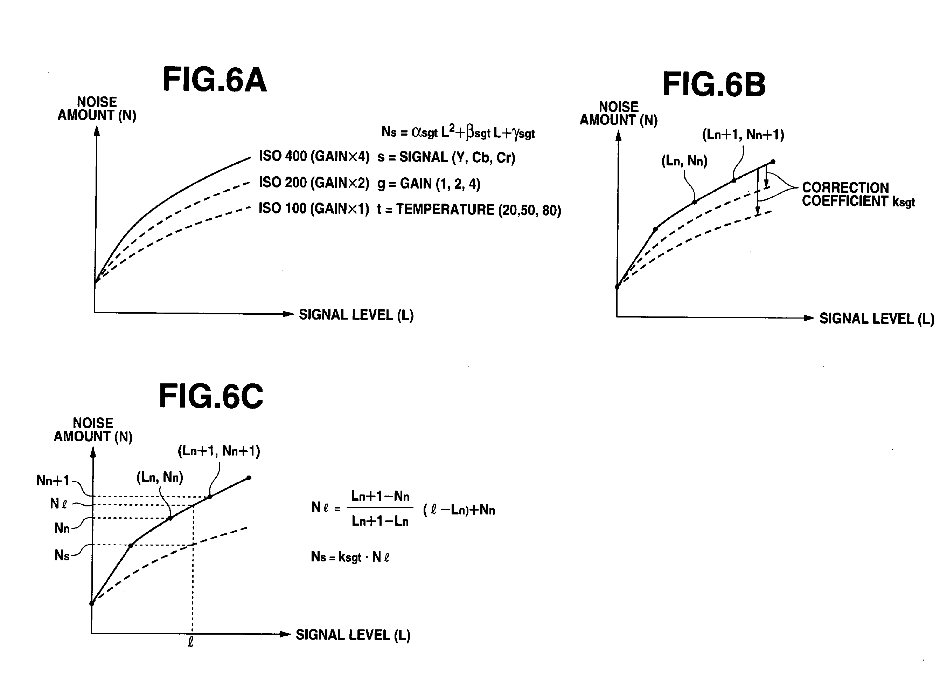

A preferable application example of this invention is a signal processing system using a reference color noise model configured of a plurality of coordinate point data shown in Fig. 6B.

According to this invention, the reference color noise model is configured of a plurality of coordinate point data, so the amount of memory necessary for the model is small, enabling reduction in costs.

With the present invention, the color noise amount calculating means comprise: look-up table means for obtaining color noise amount by inputting the information from the collecting means or the assigning means, and the average color difference value.

An embodiment corresponding to this invention is Embodiment 2 shown in Fig. 10 through Fig. 15. The look-up table unit 800 shown in Fig. 14 corresponds to the look-up table means.

A preferable application example of this invention is a signal processing system wherein the amount of color noise is obtained by the look-up table unit 800.

According to this invention, color noise amount is calculated from a look-up table, enabling high-speed processing.

With the present invention, the luminance noise amount calculating means comprise: recording means for recording a parameter group constructed of a reference luminance noise model and a correction coefficient; parameter selecting means for selecting a necessary parameter from the parameter group, based on information from the collecting means or the assigning means, and the average luminance value; interpolation means for obtaining reference luminance noise amount by interpolation computation based on the average luminance value and a reference luminance noise model from a parameter group selected by the parameter selecting means; and correcting means for obtaining the luminance noise amount by correcting the reference luminance noise amount based on a correction coefficient from the parameter group selected by the parameter selecting means.

An embodiment corresponding to this invention is Embodiment 1 shown in Fig. 1 through Fig. 9. The parameter ROM 304 shown in Fig. 5 corresponds to the recording means, the parameter selecting unit 305 shown in Fig. 5 corresponds to the parameter selecting means, the interpolation unit 306 shown in Fig. 5 corresponds to the interpolation means, and the correcting unit 307 shown in Fig. 5 corresponds to the correcting means.

A preferable application example of this invention is a signal processing system wherein a coefficient and a correction coefficient of a reference luminance noise model, used for noise amount estimation, measured beforehand, are recorded in the parameter ROM 304; the coefficient and correction coefficient of the reference luminance noise model are selected by the parameter selecting unit 305, the reference luminance noise amount is calculated by the interpolation unit 306 by interpolation processing based on the reference luminance noise model; and the luminance noise amount is obtained by the correcting unit 307 by correcting the reference luminance noise amount based on the correction coefficient.

According to this invention, the amount of luminance noise is obtained by interpolation and correction processing being performed based on the reference luminance noise model, so high-precision noise amount estimation is enabled. Also, implementation of interpolation and correction processing is easy, and a low-cost system can be provided.

With the present invention, the reference luminance noise model is configured of a plurality of coordinate point data constructed of luminance noise amount as to luminance value.

An embodiment corresponding to this invention is Embodiment 1 shown in Fig. 1 through Fig. 9.

A preferable application example of this invention is a signal processing system using a reference luminance noise model configured of a plurality of coordinate point data shown in Fig. 6B.

According to this invention, the reference luminance noise model is configured of a plurality of coordinate point data, so the amount of memory necessary for the model is small, enabling reduction in costs.

With the present invention, the luminance noise amount calculating means comprise: look-up table means for obtaining luminance noise amount by inputting the information from the collecting means or the assigning means, and the average luminance value.

An embodiment corresponding to this invention is Embodiment 2 shown in Fig. 10 through Fig. 15. The look-up table unit 800 shown in Fig. 14 corresponds to the look-up table means.

A preferable application example of this invention is a signal processing system wherein the amount of luminance noise is obtained by the look-up table unit 800.

According to this invention, luminance noise amount is calculated from a look-up table, enabling high-speed processing.

With the present invention, the noise reduction means has at least one of color noise reduction means for reducing color noise from the target region based on the noise amount, and luminance noise reduction means for reducing luminance noise from the target region based on the noise amount.

Embodiments corresponding to this invention are Embodiment 1 shown in Fig. 1 through Fig. 9, and Embodiment 2 shown in Fig. 10 through Fig. 15. The noise reduction unit 116 shown in Fig. 1, Fig. 7, Fig. 8, and Fig. 10 corresponds to the color noise reduction means, and the noise reduction unit 116 shown in Fig. 1, Fig. 7, Fig. 8, and Fig. 10 corresponds to the luminance noise reduction means.

A preferable application example of this invention is a signal processing system wherein at least one of color noise and luminance noise is reduced at the noise reduction unit 116.

According to this invention, the amount of color noise and the amount of luminance noise are independently reduced, so the reduction precision of each can be improved.

With the present invention, the color noise reduction means comprises setting means for setting a noise range in the target region, based on the noise amount from the noise estimating means; first smoothing means for smoothing color difference signals of the target region in the case of belonging to the noise range; and second smoothing means for correcting color difference signals of the target region in the case of not belonging to the noise range.

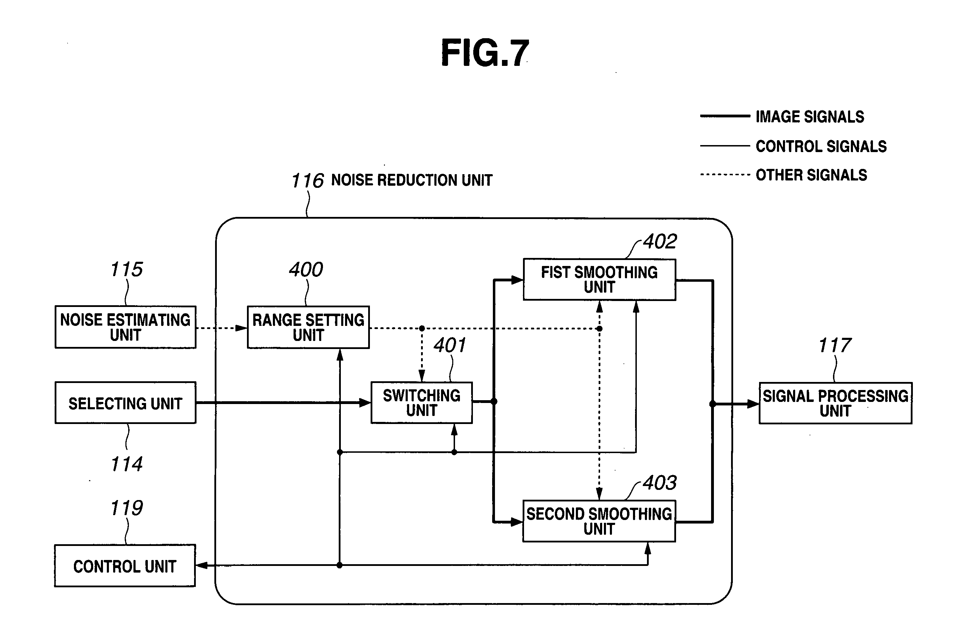

An embodiment corresponding to this invention is Embodiment 1 shown in Fig. 1 through Fig. 9. A range setting unit 400 shown in Fig. 7 corresponds to the setting means, a first smoothing unit 402 shown in Fig. 7 corresponds to the first smoothing means, and a second smoothing unit 403 shown in Fig. 7 corresponds to the second smoothing means.

A preferable application example of this invention is a signal processing system wherein smoothing of color difference signals is performed on a target region regarding which the first smoothing unit 402 has determined to belong to a noise range, and correction of color difference signals is performed on a target region regarding which the second smoothing unit 403 has determined not to belong to a noise range.

According to this invention, smoothing processing of color difference signals is performed on target regions regarding which determination has been made to belong to a noise range, and correction processing of color difference signals is performed on target regions regarding which determination has been made not to belong to a noise range, so discontinuity due to color noise reduction processing can be prevented from occurring, and high-quality signals can be obtained.

With the present invention, the luminance noise reduction means comprise: setting means for setting a noise range in the target region, based on the luminance noise amount from the noise estimating means; first smoothing means for smoothing luminance signals of the target region in the case of belonging to the noise range; and second smoothing means for correcting luminance signals of the target region in the case of not belonging to the noise range.

An embodiment corresponding to this invention is Embodiment 1 shown in Fig. 1 through Fig. 9. A range setting unit 400 shown in Fig. 7 corresponds to the setting means, a first smoothing unit 402 shown in Fig. 7 corresponds to the first smoothing means, and a second smoothing 403 unit shown in Fig. 7 corresponds to the second smoothing means.

A preferable application example of this invention is a signal processing system wherein smoothing of luminance signals is performed on a target region regarding which the first smoothing unit 402 has determined to belong to a noise range, and correction of luminance signals is performed on a target region regarding which the second smoothing unit 403 has determined not to belong to a noise range.

According to this invention, smoothing processing of luminance signals is performed on target regions regarding which determination has been made to belong to a noise range, and correction processing of luminance signals is performed on target regions regarding which determination has been made not to belong to a noise range, so discontinuity due to luminance noise reduction processing can be prevented from occurring, and high-quality signals can be obtained.

A signal processing program according to the present invention corresponds to each of the signal processing systems of the above-described inventions, and the same operations and advantages can be obtained by executing processing on a computer.

Brief Description of the Drawings

Fig. 1 is a configuration diagram of a signal processing system according to Embodiment 1 of the present invention.
Fig. 2A is an explanatory diagram relating to a local region with a Bayer color filter.
Fig. 2B is an explanatory diagram relating to a local region with a Bayer color filter.
Fig. 2C is an explanatory diagram relating to a local region with a Bayer color filter.
Fig. 2D is an explanatory diagram relating to a local region with a Bayer color filter.
Fig. 3 is a configuration diagram of the selecting unit shown in Fig. 1.
Fig. 4A is an explanatory diagram relating to hue classification based on spectral gradient.
Fig. 4B is an explanatory diagram relating to hue classification based on spectral gradient.
Fig. 4C is an explanatory diagram relating to hue classification based on spectral gradient.
Fig. 4D is an explanatory diagram relating to hue classification based on spectral gradient.
Fig. 5 is a configuration diagram of the noise estimating unit shown in Fig. 1.

Fig. 6A is an explanatory diagram relating to noise amount estimation.

Fig. 6B is an explanatory diagram relating to noise amount estimation.

Fig. 6C is an explanatory diagram relating to noise amount estimation.

Fig. 6D is an explanatory diagram relating to noise amount estimation.

Fig. 7 is a configuration diagram of the noise reduction unit shown in Fig. 1.

Fig. 8 is a configuration diagram of a signal processing system according to another form of Embodiment 1 of the present invention.

Fig. 9 is a flow chart of noise reduction processing with Embodiment 1.

Fig. 10 is a configuration diagram of a signal processing system according to Embodiment 2 of the present invention.

Fig. 11A is an explanatory diagram relating to a local region with a color difference line sequential color filter.

Fig. 11 B is an explanatory diagram relating to a local region with a color difference line sequential color filter.

Fig. 11 C is an explanatory diagram relating to a local region with a color difference line sequential color filter.

Fig. 12 is a configuration diagram of the selecting unit shown in Fig. 10.

Fig. 13 is a configuration diagram of the selecting unit according to another configuration of Embodiment 2.

Fig. 14 is a configuration diagram of the noise estimating unit shown in Fig. 10.

Fig. 15 is a flow chart of noise reduction processing with Embodiment 2 of the present invention.

Best Mode for Carrying Out the Invention

Embodiments of the invention will be described with reference to the drawings.

(Embodiment 1)

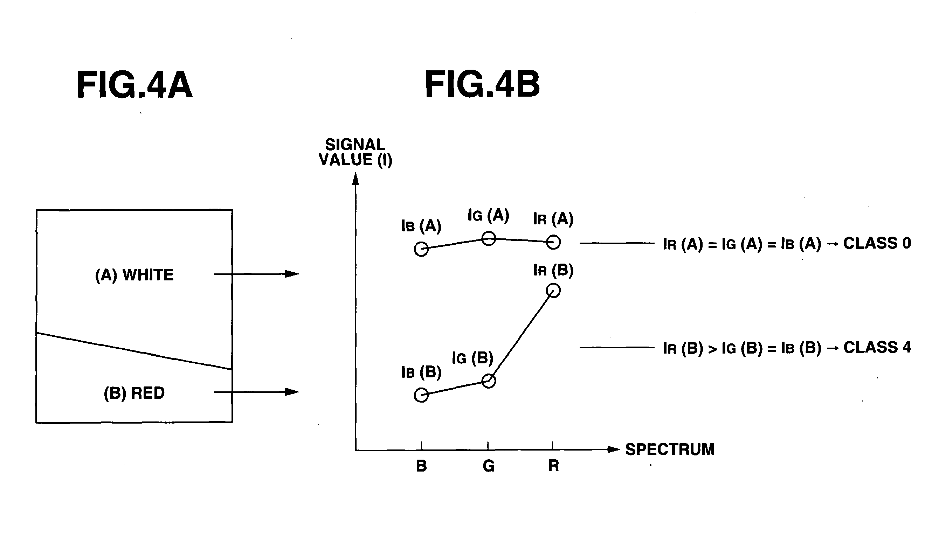

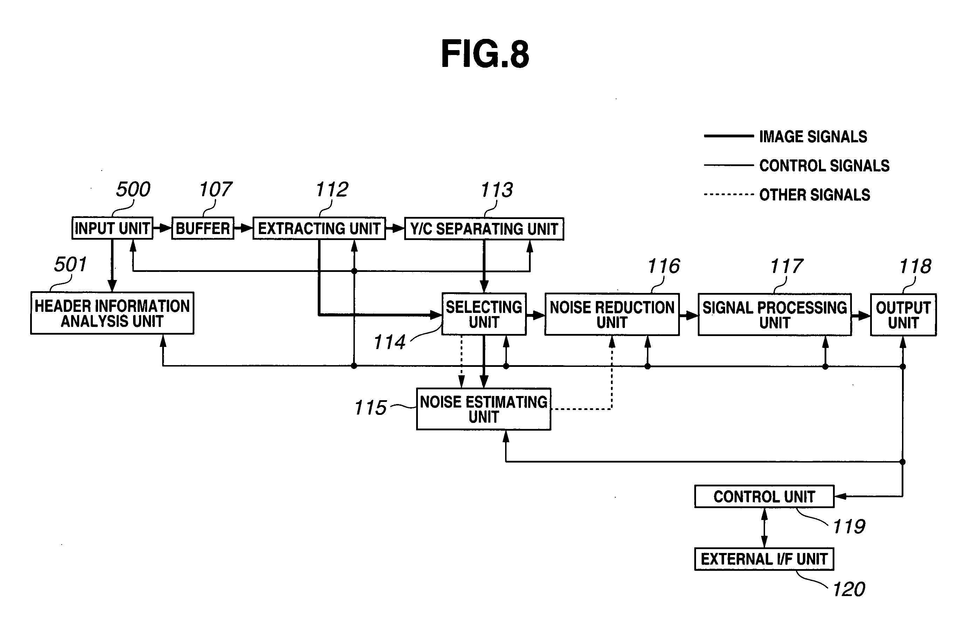

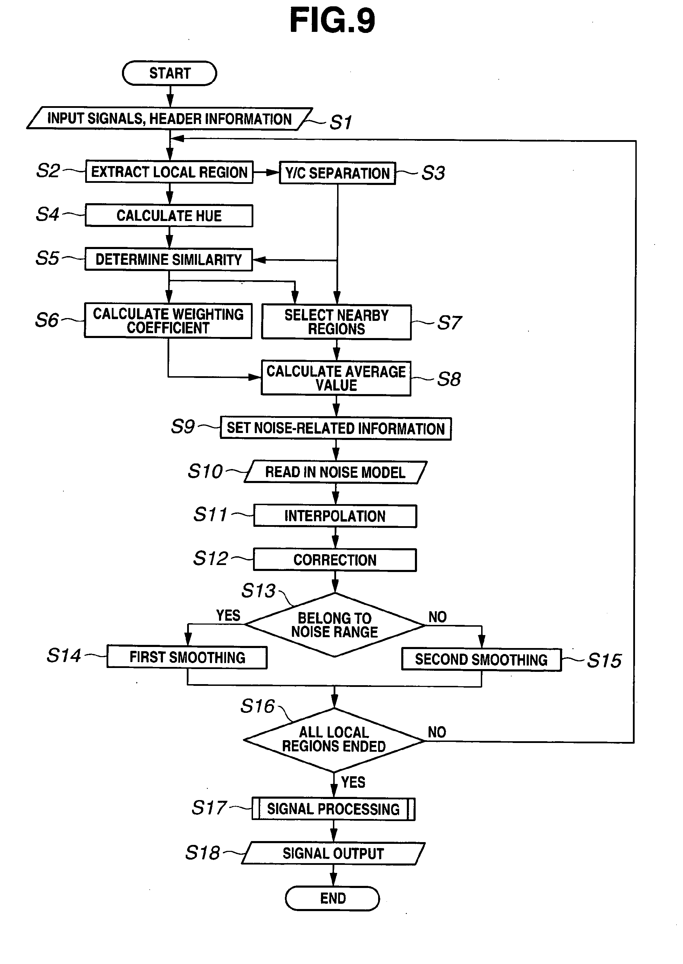

Fig. 1 is a configuration diagram of a signal processing system according to Embodiment 1 of the present invention, Fig. 2A through Fig. 2D are explanatory diagrams relating to a local region with a Bayer color filter, Fig. 3 is a configuration diagram of the selecting unit shown in Fig. 1, Fig. 4A through Fig. 4D are explanatory diagrams relating to hue classification based on spectral gradient, Fig. 5 is a configuration diagram of the noise estimating unit shown in Fig. 1, Fig. 6A through Fig. 6D are explanatory diagrams relating to noise amount estimation, Fig. 7 is a configuration diagram of the noise reduction unit shown in Fig. 1, Fig. 8 is a configuration diagram of a signal processing system according to another form of Embodiment 1, and Fig. 9 is a flow chart of noise reduction processing with Embodiment 1.

[Configuration]

Fig. 1 is a configuration diagram of Embodiment 1 of the present invention. An image captured by a lens system 100, aperture 101, low-pass filter 102, and single CCD 103, is sampled at a CDS circuit (CDS is an abbreviation of Correlated Double Sampling) 104, amplified at a gain control amplifier (hereafter abbreviated as "Gain") 105, and converted into digital signals at an analog/digital converter (hereafter abbreviated as "A/D") 106. Signals from the A/D 106 are transferred to an extracting unit 112 via a buffer 107. The buffer 107 is also connected to a pre-white balance (hereafter abbreviated as "Pre WB") unit 108, exposure control unit 109, and focus control unit 110.

The Pre WB unit 108 is connected to the Gain 105, the exposure control unit 109 is connected to the aperture 101, CCD 103, and Gain 105, and the focus control unit 110 is connected to an AF motor 111. Signals from the extracting unit 112 are connected to a Y/C separating unit 113 and selecting unit 114. The Y/C separating unit 113 is connected to the selecting unit 114, and the selecting unit 114 is connected to a noise estimating unit 115 and a noise reduction unit 116. The noise reduction unit 116 is connected to an output unit 118 such as a memory card or the like via a signal processing unit 117.

A control unit 119 such as a micro-computer or the like is bi-directionally connected to the CDS 104, Gain 105, A/D 106, Pre WB unit 108, exposure control unit 109, focus control unit 110, extracting unit 112, Y/C separating unit 113, selecting unit 114, noise estimating unit 115, noise reduction unit 116, signal processing unit 117, and output unit 118. Also bi-directionally connected to the control unit 119 is an external I/F unit 120 having a power switch, shutter button, and an interface for switching various types of photographic modes. Further, signals from a temperature sensor 121 disposed near the CCD 103 are also connected to the control unit 119.

[Operations]

The flow of signals will be described with reference to Fig. 1. Following setting shooting conditions such as ISO sensitivity and the like with the external I/F unit 120, half-pressing the shutter button starts a pre-shooting mode. Image signals captured by the lens system 100, aperture 101, low-pass filter 102, and CCD 103 are read out as analog signals by known correlated double sampling at the CDS 104. Note that, in the present embodiment, it is assumed that the CCD103 is a single CCD in front of which is arranged a Bayer type primary color filter.

Fig. 2A illustrates the configuration of a Bayer color filter. The basic unit of a Bayer filter is $2 \times 2$ pixels, with one pixel each of red (R) and blue (B), and two pixels of green (G), disposed. The analog signals are amplified by a predetermined amount at the Gain 105, and a converted into digital signals at the A/D 106 and transferred to the buffer 107. Assume that in the present embodiment, the A/D 106 performs conversion into digital signals in 12-bit scale. Image signals within the buffer 107 are transferred to the Pre WB unit 108, the photometry evaluation unit 109, and the focus control unit 110.

The Pre WB unit 108 calculates a brief white balance coefficient by accumulating each color signal by a signal with a specified luminance level in the image signal. The coefficient is transferred to the Gain 105, and white balance is carried out by performing multiplication of different gains for each color signal. The exposure control unit 109 determines the luminance level of the image signal, and controls an aperture value of the aperture 101, an electric shutter speed of the CCD 103, an amplification rate of the Gain 105 and the like in consideration of the ISO sensitivity and shutter speed of the limit of image stability or the like, so that an appropriate exposure is obtained. Also, the focus control unit 110 detects edge intensity in the signals, and obtains focused signals by controlling the AF motor 111 such that the edge intensity is maximum.

Next, main shooting is performed by fully pressing the shutter button via the external I/F unit 120, and the image signals are transferred to the buffer 107 in the same way as with the pre-shooting. The main shooting is performed based on the white balance coefficient obtained at the Pre WB unit 108, the exposure conditions obtained at the photometry evaluation unit 109, and the focus conditions obtained at the focus control unit 110, and these conditions for each shooting operation are transferred to the control unit 119. The image signal within the buffer 107 are transferred to the extracting unit 112. The extracting unit 112 sequentially extracts local regions, constructed of a target region and nearby regions as shown in Fig. 2A, under the control of the control unit 119, and transfers to the Y/C separating unit 113 and the selecting unit 114. The Y/C separating unit 113 calculates luminance signals Y and color difference signals Cb, and Cr from the target region and nearby regions, under control of the control unit 119. Note that an RGB primary color filter is assumed in the present embodiment, and the luminance signals and color difference signals are calculated based on Expression (1).

[Expression 1]

$$Y = G_{AV}$$

$$Cb = B_{AV} - G_{AV}$$

$$Cr = R_{AV} - G_{AV} \qquad (1)$$

Note that in the Expression (1), $R_{AV}$, $G_{AV}$, $B_{AV}$ mean the average values of R, G, and B, at the target region and nearby regions. The calculated luminance signals and color difference signals are transferred to the selecting unit 114. The selecting unit 114 selects nearby regions similar to the target region, using the local region from the extracting unit 112 and the luminance signals and color difference signals from the Y/C separating unit 113, under the control of the control unit 119. The target region and the selected nearby regions, and the corresponding luminance signals and color difference signals, are transferred to the noise estimating unit 115 and noise reduction unit 116. Also, a weighting coefficient is calculated for the selected nearby regions, and is transferred to the noise estimating unit 115.

The noise estimating unit 115 estimates the amount of noise based on the target region from the extracting unit 112, the selected nearby regions, the luminance signals and color difference signals, and the weighting coefficient, and other information at each shooting operation, under control of the control unit 119, and transfers this to the noise reduction unit 116. The noise reduction unit 116 performs noise reduction processing based on the target region from the extracting unit 112 and the luminance signals and color difference signals and the noise amount from the noise estimating unit 115, under control of the control unit 119, and transfers the processed target region to the signal processing unit 117.

The processing performed at the extracting unit 112, Y/C separating unit 113, selecting unit 114, noise estimating unit 115, and noise reduction unit 116, is performed in synchronization in unit of local region under control of the control unit 119. The signal processing unit 117 performs known enhancement processing, compression processing, and the like, on the noise-reduced image signals, under control of the control unit 119, and transfers to the output unit 118. The output unit 118 records and saves signals in a memory card or the like.

Fig. 2A through Fig. 2D are explanatory diagrams relating to local regions in a Bayer type primary color filter.

Fig. 2A illustrates the configuration of a local region of 6 × 6 pixels, Fig. 2B illustrates separation into luminance/color difference signals, Fig. 2C illustrates a different form of a local region of 6 × 6 pixels, and Fig. 2D illustrates a different form of a local region of 10 × 10 pixels.

Fig. 2A illustrates the configuration of a local region according to the present embodiment. In the present embodiment, 2 × 2 pixels make up the target region, and eight nearby regions of 2 × 2 pixels each surround the target region, with a local region of a size of 6 × 6 pixels. In this case, the local region is extracted by the extracting unit 112 in a two-row two-column overlapping manner, so that the target region covers all of the signals.

Fig. 2B illustrates the luminance signals and the color difference signals calculated based on Expression (1) at the target region and the nearby regions. Hereinafter, the luminance signals and the color difference signals at the target region are represented by Yo, $Cb_0$, and $Cr_0$, and the luminance signals and the color difference signals at the nearby regions are represented by $Y_i$, $Cb_i$, and $Cr_i$ (i = 1 through 8). The processing performed at the Y/C separating unit 113 is performed in a single CCD state, so one set of luminance signals and color difference signals are calculated for the target region and the nearby regions, respectively. If we say that the target region is configured of the pixels $R_{22}$, $G_{32}$, $G_{23}$, $B_{33}$, as shown in Fig. 2A, the luminance signal $Y_0$, and the color difference signals $Cb_0$ and $Cr_0$, are calculated by Expression (2).

$$[\text{Expression 2}]$$
$$Y_0 = (G_{32} + G_{23})/2$$
$$Cb_0 = B_{33} - (G_{32} + G_{23})/2$$
$$Cr_0 = R_{22} - (G_{32} + G_{23})/2 \qquad (2)$$

Also, as to nearby regions, the luminance signals and color difference signals are calculated in the same way. Note that the configuration of the local region does not need to be restricted to the above example. For example, Fig. 2C shows another configuration of a local region having a 6 × 6 pixel size, the nearby regions disposed in a one-row one-column overlapping manner. Also Fig. 2D shows another configuration of a local region having a 10 × 10 pixel size, the bearby regions being constructed of four regions each of which includes 2 × 2 pixels and four regions each of which includes 3 × 3 pixels, disposed sparsely within the local region. Thus, the target region and nearby regions can be configured in any way as long there are one or more sets of R,G, B necessary for calculating luminance signals and color difference signals.

Fig. 3 illustrates an example of the configuration of the selecting unit 114, and includes a minute fluctuation elimination unit 200, first buffer 201, gradient calculating unit 202, hue calculating unit 203, hue class ROM 204, second buffer 205, similarity determining unit 206, nearby region selecting unit 207, and coefficient calculating unit 208. The extracting unit 112 is connected to the hue calculating unit 203 via the fluctuation elimination unit 200, first buffer 201, and gradient calculating unit 202. The hue class ROM 204 is connected to the hue calculating unit 203. The Y/C separating unit 113 is connected to the similarity determining unit 206 and nearby region selecting unit 207 via the second buffer 205. The hue calculating unit 203 is connected to the similarity determining unit 206, and the similarity determining unit 206 is connected to the nearby region selecting unit 207 and the coefficient calculating unit 208. The nearby region selecting unit 207 is connected to the noise estimating unit 115 and the noise reduction unit 116. The coefficient calculating unit 208 is connected to the noise estimating unit 115.

The control unit 119 is bi-directionally connected to the minute fluctuation elimination unit 200, gradient calculating unit 202, hue calculating unit 203, similarity determining unit 206, nearby region selecting unit 207, and coefficient calculating unit 208.

The local region from the extracting unit 112 is transferred to the minute fluctuation elimination unit 200 under control of the control unit 119, and predetermined minute fluctuation components are removed. This is performed by removing lower order bits of the image signals. For example, in the present embodiment, the A/D 106 is assumed to digitize on a 12-bit scale, wherein the lower order 4 bits are shifted so as to remove minute fluctuation components, thereby converting into 8-bit signals and transferring to the first buffer 201.

The gradient calculating unit 202, hue calculating unit 203, and hue class ROM 204 obtain the spectral gradient for RGB for the target region and nearby regions with regard to the local region in the first buffer 201, under control of the control unit 119, and transfer this to the similarity determining unit 206.

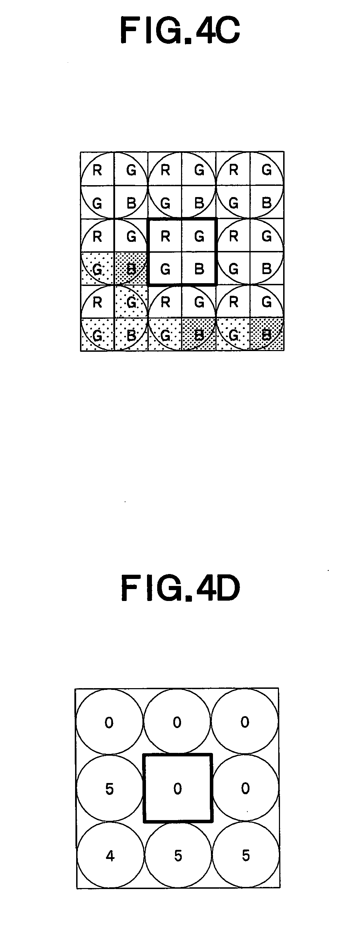

Fig. 4A through Fig. 4D are explanatory diagrams relating to hue classification based on spectral gradient. Fig. 4A illustrates an input image, Fig. 4B illustrates hue classification based on spectral gradient, Fig. 4C illustrates CCD output signals, and Fig. 4D illustrates the results of hue classification.

Fig. 4A illustrates an example of an input image, wherein we will say that the upper A region is white and the lower B region is red. Fig. 4B is a diagram wherein the signal values (I) as to the three spectrums of R, G, and B have been plotted for the A region and B region. The A region is white, and the gradient of spectral intensity as to the three wavelengths of R, G, and B is approximately equal, as in $I_R A = I_G(A) = I_B(A)$, which will be taken as class 0. The B region is red, and the gradient of spectral intensity as to the three wavelengths of R, G, and B such that the intensity of the R signals is great and the intensity of G and B are approximately equal and smaller than the intensity of the R signals, as in $I_R(B) > I_G(B) = I_B(B)$. This will be taken as class 4. There are 13 combinations of the gradient of the three signals R, G and B, shown in Table 1. That is to say, Table 1 illustrates the 13 hue classes based on spectral gradient.

[Table 1]

| Class | Gradient |
|-------|----------|
| 0 | $I_R = I_G = I_B$ |
| 1 | $I_B > I_G > I_R$ |
| 2 | $I_R = I_B > I_G$ |
| 3 | $I_R > I_B > I_G$ |
| 4 | $I_R > I_G = I_B$ |
| 5 | $I_R > I_G > I_B$ |
| 6 | $I_R = I_G > I_B$ |
| 7 | $I_G > I_R > I_B$ |
| 8 | $I_G > I_R = I_B$ |
| 9 | $I_G > I_B > I_R$ |
| 10 | $I_G = I_B > I_R$ |
| 11 | $I_B > I_G > I_R$ |
| 12 | $I_B > I_R = I_G$ |

Fig. 4C illustrates an image wherein the input image shown in Fig. 4A is captured with the Bayer single CCD shown in Fig. 2A and the above-described target region and the nearby regions have been set. Spectral gradient is obtained for each of the target region and the nearby regions, however, each region has two G signals. This is processed by obtaining the average value and taking this as the G signal. Fig. 4D illustrates the target region and the nearby regions being assigned with the classes 0 through 12 as described above, and the classified image is output to the similarity determining unit 206.

The gradient calculating unit 202 obtains the large-and-small relationship of RGB signals in increments of the target region and nearby regions, and transfers this to the hue calculating unit 203. The hue calculating unit 203 calculates the 13 hue classes based on the large-and-small relationship of RGB signals from the gradient calculating unit 202 and the information relating to hue classes from the hue class ROM 204, and transfers these to the similarity determining unit 206. Note that the hue class ROM 204 stores the information relating to the spectral gradient and the 13 hue classes shown in Table 1.

On the other hand, the luminance signals and color difference signals from the Y/C separating unit 113 is saved in the second buffer 205. The similarity determining unit 206 reads in the luminance signals for the target region and the nearby regions, under control of the control unit 119. The similarity determining unit 206 determines the similarity between the target region and the nearby regions, based on the hue class from the hue calculating unit 203, and the luminance signals. Nearby regions which satisfy the conditions of "the same hue class as the target region" and "luminance signals $Y_i$ of the nearby region belong to a range within $\pm 20\%$ of the luminance signals $Y_0$ of the target region" are determined to have high similarity, and the above determination results are transferred to the nearby region selecting unit 207 and coefficient calculating unit 208.

Luminance signals and color difference signals of a nearby region of which similarity has been determined to be high will hereafter be represented by $Y_i'$, $Cb_i'$, $Cr_i$, (i' = any one of 1 through 8). The nearby region selecting unit 207 reads out from the second buffer 205 the luminance signals $Y_{i'}$ and color difference signals $Cb_{i'}$, $Cr_{i'}$ of the nearby region of which similarity has been determined to be high by the determining unit 206, under the control of the control unit 119, and transfers this to the noise estimating unit 115. Also, the luminance signals $Y_0$ and color difference signals $Cb_0$, $Cr_0$ of the target region are read out from the second buffer 205, and transferred to the noise estimating unit 115 and noise reduction unit 116. On the other hand, the coefficient calculating unit 208 calculates a weighting coefficient $W_{i'}$ for a nearby region of which similarity has been determined to be high. This is calculated based on Expression (3).

[Expression 3]

$$W_{i'} = 1 - \frac{|Y_0 - Y_{i'}|}{\sum_{j \in i'} |Y_0 - Y_j|} \quad (3)$$

The calculated weighting coefficient $W_{i'}$ is transferred to the noise estimating unit 115.

Fig. 5 illustrates an example of the configuration of the noise estimating unit 115, including a buffer 300, average calculating unit 301, gain calculating unit 302, standard value assigning unit 303, parameter ROM 304, parameter selecting unit 305, interpolation unit 306, and correcting unit 307. The selecting unit 114 is connected to the buffer 300 and the average calculating unit 301. The buffer 300 is connected to the average calculating unit 301, and the average calculating unit 301 is connected to the parameter selecting unit 305.

The gain calculating unit 302, standard value assigning unit 303, and parameter ROM 304 are connected to the parameter selecting unit 305. The parameter selecting unit 305 is connected to the interpolation unit 306 and correcting unit 307. The control unit is bi-directionally connected to the average calculating unit 301, gain calculating unit 302, standard value assigning unit 303, parameter selecting unit 305, interpolation unit 306, and correcting unit 307.

The luminance signals and color difference signals of the target region and the nearby region regarding which determination has been made that similarity is high, from the selecting unit 114, are saved in the buffer 300. Also, a weighting coefficient for the nearby region regarding which determination has been made that similarity is high is transferred to the average calculating unit 301. The average calculating unit 301 reads in the luminance signals and the color difference signals from the buffer 300 under control of the control unit 119, and calculates the average values $AV_Y$, $AV_{Cb}$, and $AV_{Cr}$ of the luminance signals and color difference signals as to the local region, using the weighting coefficient.

[Expression 4]

$$AV_Y = \left( Y_0 + \sum_{j \in i'} Y_j \cdot W_j \right) / 2$$

$$AV_{Cb} = \left( Cb_0 + \sum_{j \in i'} Cb_j \cdot W_j \right) / 2 \quad (4)$$

$$AV_{Cr} = \left( Cr_0 + \sum_{j \in i'} Cr_j \cdot W_j \right) / 2$$

The average values of the luminance signals and the color difference signals are transferred to the parameter selecting unit 305. The gain calculating unit 302 calculates the amplification amount at the Gain 105 based on information such as the ISO sensitivity, exposure conditions, and white balance coefficient transferred from the control unit 119, and transfers this to the parameter selecting unit 305. Also, the control unit 119 obtains the temperature information of the CCD 103 from the temperature sensor 121, and transfers this to the parameter selecting unit 305. The parameter selecting unit 305 estimates the amount of noise based on the average values of the luminance signals and the color difference signals from the average calculating unit 301, the gain information from the gain calculating unit 302, and the temperature information from the control unit 119.

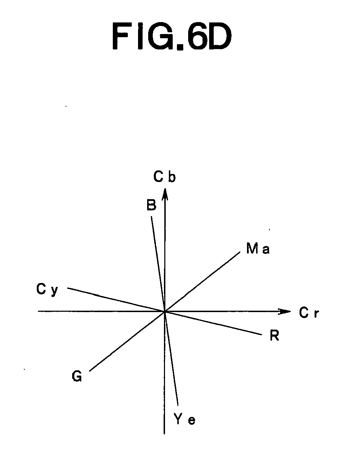

Fig. 6A through Fig. 6D are explanatory diagrams relating to estimation of noise amount. Fig. 6A illustrates the relation of noise amount as to signal level, Fig. 6B illustrates simplification of a noise model, Fig. 6C illustrates a noise amount calculation method from the simplified noise model, and Fig. 6D illustrates six hues for a color noise model.

In Fig. 6A, the amount of noise $N_s$ (s = Y, Cb, Cr) with the average value of luminance signals or color difference signals as the signal level L is plotted, increasing as to the signal level following a curve of the second order with respect to the signal level. Modeling this with a second order function yields Expression (5)

[Expression 5]

$$N_s = \alpha_s L^2 + \beta_s L + \gamma_s \qquad (5)$$

Here, $\alpha_s$, $\beta_s$, and $\gamma_s$ are constant terms. However, the noise amount changes not only with the signal level but also with the device temperature and gain. Fig. 6A plots the noise amount with regard to three types of ISO sensitivity, 100, 200, and 400, relating to gain as one example. In other words, this illustrates noise amount corresponding to onefold, twofold, and fourfold of the gain. Also, with regard to the temperature t, this illustrates noise amount for the average values at three environment temperatures of 20, 50, and 80°C. Each curve takes the form shown in Expression (5), but the coefficients thereof differ according to the ISO sensitivity relating to the gain. Formulating a model taking into consideration the above, with the temperature as t and the gain as g yields the following expression 6.

[Expression 6]

$$N_s = \alpha_{sgt} L^2 + \beta_{sgt} L + \gamma_{sgt} \qquad (6)$$

Herein, $\alpha_{sgt}$, $\beta_{sgt}$, and $\gamma_{sgt}$ are constant terms. However, recording multiple functions for Expression (6) and calculating noise amount by computation each time would make processing is cumbersome and complicated. Accordingly, model simplification such as shown in Fig. 6B is performed. In Fig. 6B, a model which gives maximal noise amount is selected as a reference noise mode, and this is approximated with a predetermined number of broken lines. Inflection points of a broken line are represented by coordinate data $(L_n, N_n)$ of signal level L and noise amount N. Here, n represents the number of inflection points. Further, a correction coefficient $k_{sgt}$ for deriving other noise models from the reference noise model is also provided. The correction coefficient $k_{sgt}$ is calculated by least-square from the noise models and the reference noise model. Deriving another noise model from the reference noise model is performed by multiplying with the correction coefficient $k_{sgt}$. Fig. 6C illustrates a method for calculating the noise amount from the simplified noise model shown in Fig. 6B. For example, let us assume obtaining the amount of noise $N_s$ corresponding to the given signal level 1, with a signal of s, gain of g, and temperature of t. First, a search is made in order to ascertain the interval of the reference noise model to which the signal level *l* belongs. Here, it is assumed that the signal level belongs to the section between $(L_n, N_n)$ and $(L_n+1, N_n+1)$. The reference noise amount $N_1$ in the reference noise model is obtained by linear interpolation.

[Expression 7]

$$N_l = \frac{N_{n+1} - N_n}{L_{n+1} - L_n}(l - L_n) + N_n \qquad (7)$$

Next, the noise amount $N_s$ is obtained by multiplying the correction coefficient $k_{sgt}$.

[Expression 8]

$$N_s = k_{sgt} \cdot N_l \qquad (8)$$

The above reference noise model can be divided into a reference luminance noise model related to luminance signals and a reference color difference noise model related to color difference signals, but these are basically of the same configuration. Note that while there is only one set of reference luminance noise model and correction coefficient for the luminance signals Y, the amount of color noise differs regarding the color difference signals Cb and Cr depending on the hue direction. With the present embodiment, a set of reference color noise model and correction coefficient is prepared for each of the six hues of R (red), G (green), B (blue), Cy (cyan), Mg (magenta), and Ye (yellow), as shown in Fig. 6D. That is to say, not two types of sets of reference color noise model and correction coefficient for the color difference signals Cb, Cr, but 12 types of reference color noise model and correction coefficient for Cb_H, Cr_H (H = R, G, B, Cy, Mg, Ye) are prepared. The coordinate data $(L_n, N_n)$ of the inflection points of the reference noise model relating to the luminance and color difference signals, and the correction coefficient $k_{sgt}$, are recorded in the parameter ROM 304. The parameter selecting unit 305 sets the signal level 1 from the average values $AV_Y$, $A V_{Cb}$, and $A V_{Cr}$ of the luminance signals and color difference signals from the average calculating unit 301, the gain g from the gain information from the gain calculating unit 302, and the temperature t from the temperature information from the control unit 119. Further, the hue signal H is obtained from the average values $AV_{Cb}$, $AV_{Cr}$ of the color difference signals based on Expression (9), and the hue closest to the hue signal H is selected from the six hues R, G, B, Cy, Mg, and Ye, thereby setting Cb_H and Cr_H.

[Expression 9]

$$H = \tan^{-1}\left(\frac{Cb_{AV}}{Cr_{AV}}\right) \qquad (9)$$

Next, the coordinate data $(L_n, N_n)$ and $(L_n+1, N_n+1)$ of the section to which the signal level 1 belongs is searched from the parameter ROM 304, which is transferred to the interpolation unit 306. Further, the correction coefficient $k_{sgt}$ is searched from the parameter ROM 304, and this is transferred to the correction unit 307. The interpolation unit 306 calculates the reference noise amount $N_1$ in the reference noise model from the signal level 1 from the parameter selecting unit 305 and the coordinate data $(L_n, N_n)$ and $(L_n+1, N_n+1)$ based on Expression (7), under control of the control unit 119, and transfers this to the correction unit 307. The correction unit 307 calculates the noise amount $N_s$ from the correction coefficient $k_{sgt}$ from the parameter selecting unit 305 and the reference noise amount $N_1$ from the interpolation unit 306 based on Expression (8) under the control of the control unit 119, and transfers this to the noise reduction unit 116 along with the average values $AV_Y$, $AV_{Cb}$, and $AV_{Cr}$ of the luminance signals and color difference signals. Note that there is no need to obtain information such as temperature t, gain g, or the like for each shooting operation. An arrangement may also be made wherein arbitrary information is recorded in the standard value assigning unit 303 so as to omit the calculating process. As a result, it is possible to achieve a high speed processing, a saving of power and the like. Also, while hues of the six directions shown in Fig. 6D were used here as the reference color noise model, there is no need to be restricted to this. Configurations may be freely made, such as using skin color, which is important as a memory color, for example.

Fig. 7 illustrates an example of the configuration of the noise reduction unit 116, including a range setting unit 400, a switching unit 401, a first smoothing unit 402, and a second smoothing unit 403. The noise estimating unit 115 is connected to the range setting unit 400, and the range setting unit 400 is connected to the switching unit 401, first smoothing unit 402, and second smoothing unit 403. The selecting unit 114 is connected to the switching unit 401, and the switching unit 401 is connected to the first smoothing unit 402 and second smoothing unit 403. The first smoothing unit 402 and second smoothing unit 403 are connected to the signal processing unit 117. The control unit 119 is bi-directionally connected to the range setting unit 400, switching unit 401, first smoothing unit 402, and second smoothing unit 403. The noise estimating unit 115 transfers the average values $AV_Y$, $AV_{Cb}$, and $AV_{Cr}$ of the luminance signals and color difference signals, and the noise amount $N_s$, to the range setting unit 400. The range setting unit 400 sets the upper limit $U_s$ and lower limit $D_s$ as a permissible range for the noise amount of the luminance signals and color difference signals as shown in Expression (10), under the control of the control unit 119.

[Expression 10]

$$U_Y = AV_Y + N_Y/2 \qquad D_Y = AV_Y - N_Y/2$$

$$U_{cb} = AV_{cb} + N_{cb}/2 \qquad D_{cb} = AV_{cb} - N_{cb}/2$$

$$U_{cr} = AV_{cr} + N_{cr}/2 \qquad D_{cr} = AV_{cr} - N_{cr}/2 \qquad (10)$$

The above permissible ranges $U_s$ and $D_s$ are transferred to the switching unit 401. Also, the range setting unit 400 transfers the average values $AV_Y$, $AV_{Cb}$, and $AV_{Cr}$ of the luminance signals and color difference signals, and the noise amount $N_s$, to the first smoothing unit 402, and second smoothing unit 403. The switching unit 401 reads in the luminance signals $Y_0$ and color difference signals $Cb_0$, $Cr_0$ of the target region from the selecting unit 114 under the control of the control unit 119, and performs determination regarding whether or not these belong to the above permissible ranges. There are three ways that determination is made, namely, "belonging to the noise range", "above the noise range", and "below the noise range". In the case of "belonging to the noise range", the switching unit 401 transfers the luminance signals $Y_0$ and color difference signals $Cb_0$, $Cr_0$ of the target region to the first smoothing unit 402, and otherwise transfers these to the second smoothing unit 403. The first smoothing unit 402 performs processing for substituting the average values $AV_Y$, $AV_{Cb}$, and $AV_{Cr}$ of the luminance signals and color difference signals from the range setting unit 400 into the luminance signals $Y_0$ and color difference signals $Cb_0$, $Cr_0$ of the target region from the switching unit 401.

$$[\text{Expression 11}]$$
$$Y_0 = AV_Y$$
$$Cb_0 = AV_{cb}$$
$$Cr_0 = AV_{cr} \quad (11)$$

As shown in Fig. 2A, in the case that the target region is configured of the pixels $R_{22}$, $G_{32}$, $G_{23}$, $B_{33}$, the processing in Expression (11) can be converted as shown in Expression (12), based on Expression (2).

$$[\text{Expression 12}]$$
$$G_{32} = AV_Y$$
$$G_{23} = AV_Y$$
$$B_{22} = AV_{cb} + AV_Y$$
$$R_{22} = AV_{cr} + AV_Y \quad (12)$$

The processing in Expression (12) means that the target region which has been subjected to processing in the form of luminance signals $Y_0$ and color difference signals $Cb_0$, $Cr_0$ is returned to the original RGB signals. The RGB signals in Expression (12) are transferred to the signal processing unit 117. The second smoothing unit 403 performs processing for correcting the luminance signals $Y_0$ and color difference signals $Cb_0$, $Cr_0$ of the target region from the switching unit 401 using the average value $AV_Y$ and noise amount $N_s$ of the luminance signals from the range setting unit 400. First, in the case of "above the noise range", correction is performed as in Expression (13).

$$[\text{Expression 13}]$$
$$Y_0 = Y_0 - N_Y/2$$
$$Cb_0 = Cb_0 - N_{Cb}/2$$
$$Cr_0 = Cr_0 - N_{Cr}/2 \quad (13)$$

In the case that the target region is configured of the pixels $R_{22}$, $G_{32}$, $G_{23}$, $B_{33}$, as shown in Fig. 2A, the processing of Expression (13) is as shown in Expression (14).

$$[\text{Expression 14}]$$
$$G_{32} = AV_Y - N_Y/2$$
$$G_{23} = AV_Y - N_Y/2$$
$$B_{33} = B_{33} + AV_Y - N_{Cb}/2$$
$$R_{22} = R_{22} + AV_Y - N_{Cr}/2 \quad (14)$$

Also, in the case of "below the noise range", correction is performed as in Expression (15).

[Expression 15]

$$Y_0 = Y_0 + N_Y/2$$

$$Cb_0 = Cb_0 + N_{Cb}/2$$

$$Cr_0 = Cr_0 + N_{Cr}/2 \qquad (15)$$

In the case that the target region is configured of the pixels $R_{22}$, $G_{32}$, $G_{23}$, $B_{33}$, as shown in Fig. 2A, the processing of Expression (15) is as shown in Expression (16).

[Expression 16]

$$G_{32} = AV_Y + N_Y/2$$

$$G_{23} = AV_Y + N_Y/2$$

$$B_{33} = B_{33} + AV_Y - N_{Cb}/2$$

$$R_{22} = R_{22} + AV_Y - N_{Cr}/2 \qquad (16)$$

The processing of Expression (14) or Expression (16) also means that the target region which has been subjected to processing in the form of luminance signals $Y_0$ and color difference signals $Cb_0$, $Cr_0$ is returned to the original RGB signals. The RGB signals in Expression (14) or Expression (16) are transferred to the signal processing unit 117.

According to the above configuration, noise amount estimation corresponding to the dynamically changing conditions such as signal level, the temperature and gain for each shooting operation and so on, and optimal noise reduction for the entire image, is enabled, so high-quality signals can be obtained. Even in the case that the above information cannot be obtained, standard values are used to estimate the noise amount, so stable noise reduction effects can be obtained.

Further, intentionally omitting a part of parameter calculations enables a signal processing system to be provided wherein reduction in costs and a saving of power can be realized. Also, the target region and similar nearby regions regarding which noise reduction processing is to be performed are selected based on hue and luminance information, following which these are processed together, so noise amount estimation can be performed using a larger area, whereby the precision of estimation can be improved.

Further, independently estimating the color noise amount and the luminance noise amount allows the estimation precision of each to be improved. A model is used for calculating noise amount, so high-precision noise amount estimation can be made. Also, implementation of interpolation and correction processing based on the reference model is easy, and a low-cost system can be provided.

Further, the amount of memory needed for the model is small, whereby reductions in cost can be made. Also, the noise reduction processing is performed setting a permissible range based on the noise amount, so reduction processing can be performed wherein preservation of original signals is excellent and occurrence of discontinuity is prevented. Further, post-noise-reduction-processing signals are output as the original signals, so compatibility with conventional processing systems is maintained, enabling combination with various systems.

Also, luminance signals and color difference signals are obtained based on the Bayer type color filter placement, thereby enabling high-speed processing. Note that in the above-described embodiment, noise amount estimation and noise reduction processing is performed using all of the selected nearby regions, but there is no need to be restricted to such a configuration. Rather, configurations may be freely made, such as for example, the nearby regions in the diagonal direction from the target region being eliminated in noise amount estimation, so as to improve the precision by performing estimation in a relatively narrow region, and all selected nearby regions being used in the noise reduction processing so as to improve smoothing capabilities by performing the processing in relatively wide region, and so forth.

Also, in the above-described embodiment, the signal processing system is of a configuration integrally formed with the image pickup unit of the lens system 100, aperture 101, low-pass filter 102, CCD 103, CDS 104, Gain 105, A/D 106, Pre WB unit 108, exposure control unit 109, focus control unit 110, AF motor 111, and temperature sensor 121, but there is no need to be restricted to such a configuration. For example, as shown in Fig. 8, it is possible to store the image signals in an unprocessed raw data state which is captured by a separate image pickup unit, and a header portion of the image signals, in which accessory information including pickup conditions or the like is included, in a recording medium such as a memory card, and to process the image signals and the accessory information taken out from the recording medium.

Fig. 8 shows an arrangement wherein the lens system 100, aperture 101, low-pass filter 102, CCD 103, CDS 104, Gain 105, A/D 106, Pre WB unit 108, exposure control unit 109, focus control unit 110, AF motor 111, and temperature sensor 121 are omitted from the configuration shown in Fig. 1, and an input unit 500 and header information analysis unit 501 are added. The basic configuration is equivalent to that in Fig. 1, and the same components are assigned with the same names and numerals. Now, only the different portions will be described. The input unit 500 is connected to the buffer 107 and the header information analysis unit 501. The control unit 119 is bi-directionally connected to the input unit 500 and the header information analysis unit 501. Starting reproduction operations through the external I/F unit 120 such as a mouse, keyboard, and the like, allows the signals and the header information saved in the recording medium such as a memory card, to be read in from the input unit 500. The signals from the input unit 500 are transferred to the buffer 107, and the header information is transferred to the header information analysis unit 501. The header information analysis unit 501 extracts information at each shooting operation from the header information, and transfers this to the control unit 119. Subsequent processing is equivalent to that in Fig. 1.

Further, while processing with hardware is assumed in the above embodiment, there is no need to be restricted to such a configuration. For example, a construction is also possible in which the signals from the CCD 103 are taken as raw data in an unprocessed state, and information from the control section 119 such as the temperature and gain for each shooting operation and so on are added to the raw data as header information, and separately performing processing by software.

Fig. 9 illustrates a flow relating to software processing of the noise reduction processing. In step S1, header information such as signals and temperature, gain, and so forth, are read in. In step S2, a local region configured of the target region and nearby regions such as shown in Fig. 2A, is extracted. In step S3, the luminance signals and color difference signals are separated as shown in Expression (1). In step S4, the target region and the nearby regions within the local region are classified into hue classes, such as shown in Table 1. In step S5, the similarity of each of the nearby regions and the target region is determined, based on the hue class information from step S4 and the luminance information from step S3. In step S6, the weighting coefficient shown in Expression (3) is calculated. In step S7, the luminance signals and color difference signals of the target region and the nearby regions determined to have high similarity based on the similarity from step S5 are selected from step S3. In step S8, the average values of the luminance signals and color difference signals, shown in Expression (4), are calculated. In step S9, information such as temperature, gain, and the like, are set from the header information that has been read in. In the case that necessary parameters do not exist in the header information, predetermined standard values are assigned. In step S 10, coordinate data of the reference noise model, and a correction coefficient, are read in. In step S11, the reference noise amount is obtained by the interpolation processing shown in Expression (7). In step S 12, the amount of noise is obtained by the correction processing shown in Expression (8).

In step S 13, determination is made regarding whether or not the luminance signals and color difference signals of the target region belong within the permissible range shown in Expression (10), and the flow branches to step S14 in the case of belonging, and to step S 15 in the case of not belonging. In step S 14, the processing shown in Expression (12) is performed. In step S 15, the processing shown in Expression (14) and Expression (16) is performed. In step S16, a judgment is made as to whether or not the extraction of all local regions has been completed, in cases where the extraction has not been completed, the processing returns to the abovementioned step S2, while in a case where the extraction has been completed, the processing proceeds to step S 17. In step S 17, known enhancing processing and compression processing and the like are performed. In step S18, the processed signals are output, and the flow ends.

(Embodiment 2)

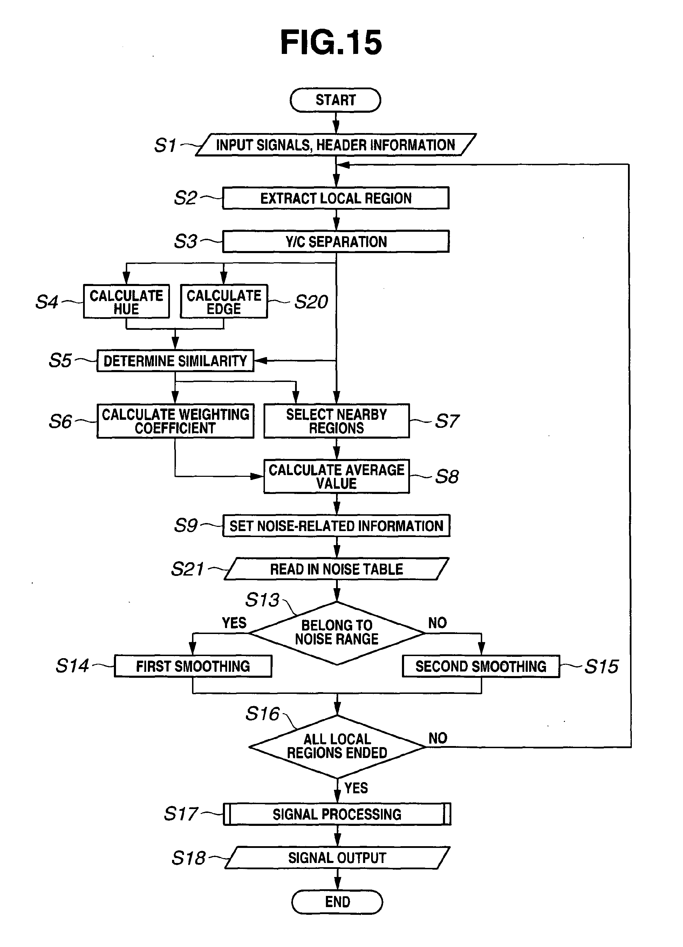

Fig. 10 is a configuration diagram of a signal processing system according to Embodiment 2 of the present invention, Fig. 11A through Fig. 11C are explanatory diagrams relating to a local region in a color difference line sequential color filter, Fig. 12 is a configuration diagram of the selecting unit shown in Fig. 10, Fig. 13 is a configuration diagram of the selecting unit according to another configuration, Fig. 14 is a configuration diagram of the noise estimating unit shown in Fig. 10, and Fig. 15 is a flow chart of noise reduction processing with Embodiment 2.

[Configuration]

Fig. 10 is a configuration diagram of Embodiment 2 of the present invention. The present embodiment is a configuration wherein the connection from the extracting unit 112 to the selecting unit 114 in Embodiment 1 of the present invention has been deleted. The basic configuration is equivalent to that in Embodiment 1, and the same components are assigned with the same names and numerals.

[Operations]

This is basically the same as with Embodiment 1, and only the different portions will be described. In Fig. 10, the flow of signals will be described. Image signals captured via the lens system 100, aperture 101, low-pass filter 102, and CCD 103, are transferred to the buffer 107.

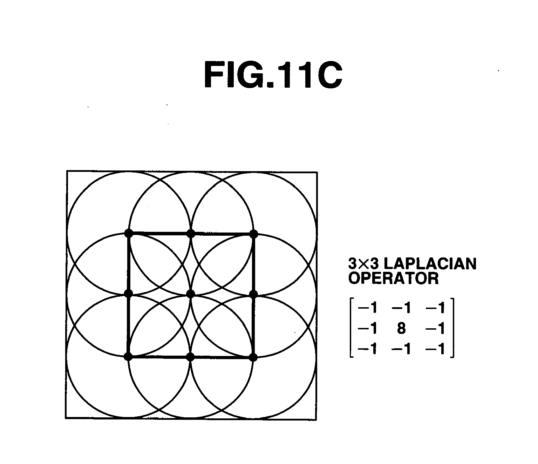

Note that in the present embodiment, a single CCD having in front thereof a color difference line sequential color filter is assumed for the CCD 103. Fig. 11A illustrates the configuration of a color difference line sequential type color filter. Fig. 11A illustrates the configuration of an $8 \times 8$ pixel local region, Fig. 11B illustrates separation into luminance/color difference signals, and Fig. 11C illustrates extracting of edge components.

With the color difference line sequential method, $2 \times 2$ pixels is the basic unit, with one pixel each of cyan (Cy), magenta (Mg), yellow (Ye), and green (G) being provided. Note however, that the positions of Mg and G are inverted each line. The image signals in the buffer 107 are transferred to the extracting unit 112. The extracting unit 112 sequentially extracts $8 \times 8$ pixel local regions constructed of a $4 \times 4$ pixel target region and $4 \times 4$ pixel nearby regions as shown in Fig. 11 A, under the control of the control unit 119, and transfers these to the Y/C separating unit 113 and the selecting unit 114. In this case, the extracting unit 112 extracts the local regions in a two-row two-column overlapping manner, so that the target region covers all signals. The Y/C separating unit 113 calculates the luminance signals Y and color difference signals Cb, Cr from the region of the interest and the nearby regions in $2 \times 2$ pixel units based on Expression (17), under the control of the control unit 119.

[Expression 17]

$$Y = Cy + Ye + G + Mg$$

$$Cb = (Cy + Mg) - (Ye + G)$$

$$Cr = (Ye + Mg) - (Cy + G) \qquad (17)$$

That is to say, nine each are calculated of the luminance signals and color difference signals for the $4 \times 4$ pixel target region and nearby regions. Fig. 11 B illustrates luminance signals and color difference signals calculated based on the Expression (17) in the target region and nearby regions as a unit. The calculated luminance signals and color difference signals are transferred to the selecting unit 114. The selecting unit 114 selects nearby regions similar to the target region using the luminance signals and color difference signals from the Y/C separating unit 113, under the control of the control unit 119. The target region and selected nearby regions, and the corresponding luminance signals and color difference signals, are transferred to the noise estimating unit 115 and noise reduction unit 116. Also, a weighting coefficient relating to the selected nearby regions is calculated, and transferred to the noise estimating unit 115.

The noise estimating unit 115 estimates the noise amount based on the target region, the selected nearby regions, luminance signals, color difference signals, and weighting coefficient from the extracting unit 112, and other information at each shooting operation, and transfers this to the noise reduction unit 116, under the control of the control unit 119. The noise reduction unit 116 performs noise reduction processing of the target region based on the target region, luminance signals, and color difference signals from the extracting unit 112, and the noise amount from the noise estimating unit 155, under control of the control unit 119, and transfers the processed target region to the signal processing unit 117.

The processing at the extracting unit 112, Y/C separating unit 113, selecting unit 114, noise estimating unit 115, and noise reduction unit 116, is performed synchronously in a local region as a unit, under the control of the control unit 119. The signal processing unit 117 performs known enhancement processing and compression processing and the like on the image signals following noise reduction, and outputs to the output unit 118, under the control of the control unit 119. The output unit 118 records and saves the signals to the memory card or the like.

Fig. 12 illustrates an example of the configuration of the selecting unit 114 in Fig. 10, and is of a configuration wherein an edge calculating unit 600 is added to the selecting unit 114 shown in Fig. 3 in Embodiment 1 of the present invention, and the gradient calculating unit 202 and the hue class ROM 204 are deleted from the selecting unit 114 shown in Fig. 3 in Embodiment 1 of the present invention. The basic configuration is equivalent to the selecting unit 114 shown in Fig. 3, and the same components are assigned with the same names and numerals. The following is a description of only the different portions. The Y/C separating unit 113 is connected to the minute fluctuation elimination unit 200. The minute fluctuation elimination unit 200 is connected to the hue calculating unit 203 via the first buffer 201. The second buffer 205 is connected to the edge calculating unit 600, and the edge calculating unit 600 is connected to the similarity determining unit 206. The control unit 119 is connected bi-directionally to the edge calculating unit 600. Luminance signals and color difference signals from the target region and the nearby regions from the Y/C separating unit 113 are transferred to the minute fluctuation elimination unit 200 and the second buffer 205. The minute fluctuation elimination unit 200 removes minute fluctuation components by performing lower-order bit shift processing for the color difference signals, and transfers to the first buffer 201. The hue calculating unit 203 calculates hue signals H based on Expression (9), from the color difference signals of the target region and the nearby regions of the first buffer 201, under the control of the control unit 119. Nine points each of hue signals are obtained as shown in Fig. 11 B from the target region and the nearby regions, and these are averaged to yield hue signals for each region. The calculated hue signal is transferred to the similarity determining unit 206. On the other hand, the edge calculating unit 600 reads in the luminance signals of the target region and the nearby regions from the second buffer 205, under the control of the control unit 119. An edge intensity value E is calculated by applying the $3 \times 3$ Laplacian operator shown in Expression (18) to the luminance signals for each region.

$$[\text{Expression 18}]$$

$$\begin{bmatrix} -1 & -1 & -1 \\ -1 & 8 & -1 \\ -1 & -1 & -1 \end{bmatrix} \qquad (18)$$

With the present embodiment, the target region and the nearby regions have nine points each of luminance signals as shown in Fig. 11 B, so one edge intensity value is calculated for each region, as shown in Fig. 11C. The calculated edge intensity values are transferred to the similarity determining unit 206. The similarity determining unit 206 reads in the luminance signals of the target region and the nearby regions from the second buffer 205, under the control of the control unit 119. The similarity determining unit 206 determines the similarity between the target region and the nearby regions, based on the hue signals from the hue calculating unit 203 and the edge intensity values from the edge calculating unit 600 and the luminance signals. Here, a nearby region which satisfies the conditions of "hue signal $H_i$ of the nearby region belonging to a range of $\pm 25\%$ of the hue signal $H_0$ of the target region" and "edge intensity value $E_i$ of the nearby region belonging to a range of $\pm 20\%$ of the edge intensity value $E_0$ of the target region" and "luminance signal Yi of the nearby region belonging to a range of $\pm 20\%$ of the luminance signal $Y_0$ of the target region" is determined as having high similarity, and the determination results are transferred to the nearby region selecting unit 207 and coefficient calculating unit 208. Subsequent processing is the same as with Embodiment 1 according to the present invention shown in Fig. 3.

Note that, while luminance, hue, and edge intensity have been used for determining similarity between the target region and the nearby regions with the above-described embodiment, there is no need to be limited to such a configuration. For example, frequency information may be used as shown in Fig. 13. Fig. 13 is a diagram wherein the edge calculating unit 600 in Fig. 12 has been replaced with a DCT conversion unit 700, and the basic configuration thereof is equivalent to the selecting unit 114 shown in Fig. 12, with the same names and numerals being assigned to the same components. Now, only the different portions will be described. The second buffer 205 is connected to the DCT conversion unit 700, and the DCT conversion unit 700 is connected to the similarity determining unit 206. The control unit 119 is connected bi-directionally with the DCT conversion unit 700. The DCT conversion unit 700 reads in luminance signals of the target region and nearby regions from the second buffer 205, under the control of the control unit 119. Known DCT conversion is performed on the luminance signals of each of the regions. The frequency signals after conversion are transferred to the similarity determining unit 206. At the similarity determining unit 206, the similarity determining unit 206 determines the similarity of the target region and nearby regions based on the hue signals from the hue calculating unit 203 and the frequency signals and luminance signals from the DCT conversion unit 700.

Fig. 14 illustrates an example of the configuration of the noise estimating unit 115 shown in Fig. 10, wherein a look-up table 800 is added to the noise estimating unit 115 shown in Fig. 5 according to Embodiment 1 of the present invention, and the parameter ROM 304, parameter selecting unit 305, interpolation unit 306, and correction unit 307 are omitted therefrom. The basic configuration is equivalent to the noise estimating unit 115 shown in Fig. 5, and the same names and numerals are assigned to the same components. Now, only the different portions will be described. The average calculating unit 301, gain calculating unit 302, and standard value assigning unit 303 are connected to the look-up table 800. The look-up table 800 is connected to the noise reduction unit 116. The control unit 119 is bi-directionally connected with the look-up table 800. The average calculating unit 301 reads in luminance signals and color difference signals from the buffer 300 under the control of the control unit 119, and calculates the average values $AV_Y$, $AV_{Cb}$, $AV_{Cr}$ of the luminance signals and color difference signals for the local region using a weighting coefficient. The average values of the luminance signals and the color difference signals are transferred to the look-up table 800. The gain calculating unit 302 obtains the amount of amplification at the Gain 105 based on information relating to the ISO sensitivity and exposure conditions and white balance coefficient, transferred from the control unit 119, and transfers this to the look-up table 800. Also, the control unit 119 obtains the temperature information of the CCD 103 from the temperature sensor 121, and transfers this to the look-up table 800.

The look-up table 800 estimates the noise amount based on the average values of the luminance signals and color difference signals from the average calculating unit 301, the gain information from the gain calculating unit 302, and the temperature information from the control unit 119. The look-up table 800 is a look-up table storing the relation between temperature, signal value level, gain, shutter speed, and noise amount, and is configured with a technique equivalent to that in Embodiment 1. The noise amount obtained at the look-up table 800 is transferred to the noise reduction unit 116. Also, in the same way as with Embodiment 1, the standard value assigning unit 303 has a function of assigning a standard value in the case that any of parameter has been omitted.

According to the above configuration, noise amount estimation corresponding to the dynamically changing conditions such as signal level, the temperature and gain for each shooting operation and so forth, and optimal noise reduction for the entire image, is enabled, so high-quality signals can be obtained. Even in the case that the above information cannot be obtained, standard values are used to estimate the noise amount, so stable noise reduction effects can be obtained. Further, intentionally omitting a part of parameter calculations enables a signal processing system to be provided wherein reduction in costs and energy conservation can be realized. Also, the target region and similar nearby regions regarding which noise reduction processing is to be performed are selected based on hue, luminance, edge, and frequency information, following which these are processed together, so noise amount estimation can be performed using a larger area, whereby the precision of estimation can be improved.

Further, independently estimating the color noise amount and the luminance noise amount allows the estimation precision of each to be improved. A look-up table is used for calculating noise amount, so high-speed noise amount estimation can be made. Also, the noise reduction processing is performed setting a permissible range based on the noise amount, so reduction processing can be performed wherein preservation of original signals is excellent and occurrence of discontinuity is prevented.

Further, since the image signal following noise reduction processing is output as the original image signal format, compatibility with conventional processing systems is maintained, enabling combination with various systems. Also, luminance signals and color difference signals are obtained based on the color difference line sequential type color filter placement, thereby enabling high-speed processing. Note that while in the above-described embodiment, description has been made with regard to a complementary-color color difference line sequential single CCD as an example, but there is no need to be restricted to this. For example, this is equally applicable to the primary color Bayer type illustrated in Embodiment 1. Also, this is applicable two CCD and three CCD arrangements, as well.

Further, while processing with hardware is assumed in the above embodiment, there is no need to be restricted to such a configuration. For example, a construction is also possible in which the signals from the CCD 103 are taken as raw data in an unprocessed state, and information from the control section 119 such as the temperature and gain for each shooting operation and so on are added to the raw data as header information, and performing processing by software.

Fig. 15 illustrates a flow chart relating to software processing of the noise reduction processing. Note that the processing steps which are the same as those in the noise reduction processing flow chart of Embodiment 1 of the present invention shown in Fig. 9 are assigned with the same step numbers. In step S1, header information such as signals and temperature, gain, and so forth, are read in. In step S2, a local region configured of the target region and nearby regions such as shown in Fig. 11A, is extracted. In step S3, the luminance signals and color difference signals are separated as shown in Expression (17). In step S4, the hue signals are calculated based on Expression (9) from the target region and nearby regions within the local region. In step S20, an edge intensity value is calculated by applying the Laplacian operator shown in Expression (18). In step S5, the similarity of each of the nearby regions and the target region is determined, based on the hue information from step S4 and the luminance information from step S3 and the edge information from step S20. In step S6, the weighting coefficient shown in Expression (3) is calculated. In step S7, the luminance signals and color difference signals of the target region and the nearby regions determined to have high similarity based on the similarity from step S5 are selected from step S3. In step S8, the average values of the luminance signals and color difference signals, shown in Expression (4), are calculated. In step S9, information such as temperature, gain, and the like, are set from the header information that has been read in. In the case that necessary parameters do not exist in the header information, predetermined standard values are assigned. In step S21, the amount of noise is obtained using the look-up table.

In step S 13, determination is made regarding whether or not the luminance signals and color difference signals of the target region belong within the permissible range shown in Expression (10), and the flow branches to step S14 in the case of belonging, and to step S 15 in the case of not belonging. In step S 14, the processing shown in Expression (11) is performed. In step S15, the processing shown in Expression (13) and Expression (15) is performed. In step S16, determination is made regarding whether or not all local regions have been completed, and the flow branches to step S2 in the case of not being completed, and to step S 17 in the case of being completed. In step S 17, known enhancing processing and compression processing and the like are performed. In step S 18, the processed signals are output, and the flow ends.

As described above, according to the present invention, modeling is performed for the amount of noise of color signals and luminance signals corresponding not only to signal level but also to factors which dynamically change, such as temperature at each shooting operation, gain, and so forth, thereby enabling noise reduction processing optimized for shooting conditions. Also, noise reduction processing is independently performed on both luminance noise and color noise, thereby realizing high-precision reduction of both noises, and generating high-quality signals.

Industrial Applicability

The present invention can be broadly applied to devices wherein there is a need to reduce, with high precision, random noise of color signals and luminance signals originating at the image pickup device, such as image capturing devices, image reading devices, and so forth.

**Claims**

1. A signal processing system for performing noise reduction processing on signals from an image pickup device in front of which is arranged a color filter, the system comprising:

   extracting means for extracting a local region, from the signals, formed by a target region which noise reduction processing is performed, and at least one or more nearby regions which exist neighborhood of the target region;
   separating means for calculating luminance signals and color difference signals for each of the target region and the nearby regions;
   selecting means for selecting the nearby regions similar to the target region;
   noise estimating means for estimating the amount of noise from the target region and the nearby region selected by the selecting means; and
   noise reduction means for reducing noise in the target region based on the amount of noise.

2. The signal processing system according to Claim 1, wherein the image pickup device is a single image sensor in front of which is arranged a Bayer type primary color filter constituted of R (red), G (green), and B (blue), or a single image sensor in front of which is arranged a color difference line sequential type complementary color filter constituted of Cy (cyan), Mg (magenta), Ye (yellow), and G (green).

3. The signal processing system according to Claim 1, wherein the target region and nearby regions are regions including at least one set or more color filters necessary for calculating the luminance signals and the color difference signals.

4. The signal processing system according to Claim 1, the selecting means further comprising:

   hue calculating means for calculating hue signals for each of the target region and the nearby regions;
   similarity determining means for determining a similarity of the target region and the nearby regions based on at least one of the luminance signals and the hue signals; and
   nearby region selecting means for selecting the nearby regions based on the similarity.

5. The signal processing system according to Claim 1, the selecting means further comprising:

   hue calculating means for calculating hue signals for each of the target region and the nearby regions;
   edge calculating means for calculating edge signals for each of the target region and the nearby regions;
   similarity determining means for determining a similarity of the target region and the nearby regions based on at least one of the luminance signals and the hue signals and the edge signals; and
   nearby region selecting means for selecting the nearby regions based on the similarity.

6. The signal processing system according to Claim 1, the selecting means further comprising:

   hue calculating means for calculating hue signals for each of the target region and the nearby regions;
   frequency calculating means for calculating frequency signals for each of the target region and the nearby regions;

similarity determining means for determining a similarity of the target region and the nearby regions based on at least one of the luminance signals and the hue signals and the frequency signals; and
nearby region selecting means for selecting the nearby regions based on the similarity.

7. The signal processing system according to Claim 1, the selecting means further comprising
control means for controlling such that the nearby regions used by the noise estimating means and the noise reduction means differ.

8. The signal processing system according to Claims 4, 5, or 6, the selecting means further comprising
elimination means for eliminating predetermined minute fluctuations from the signals of the target region and the nearby regions.

9. The signal processing system according to Claims 4, 5, or 6, the selecting means further comprising
coefficient calculating means for calculating weighting coefficients for the nearby regions based on the similarity.

10. The signal processing system according to Claim 1, the noise estimating means comprising:

at least one of color noise estimating means for estimating the amount of color noise from the target region and the nearby regions selected by the selecting means, and luminance noise estimating means for estimating the amount of luminance noise from the target region and the nearby regions selected by the selecting means.

11. The signal processing system according to Claim 10, the color noise estimating means further comprising:

collecting means for collecting information relating to temperature value of the image pickup device and gain value corresponding to the signals;
assigning means for assigning standard values for information which cannot be obtained by the collecting means;
average color difference calculating means for calculating average color difference values from the target region and the nearby regions selected by the selecting means; and
color noise amount calculating means for calculating the amount of color noise, based on information from the collecting means or assigning means, and the average color difference values.

12. The signal processing system according to Claim 10, the luminance noise estimating means further comprising:

collecting means for collecting information relating to temperature value of the image pickup device and gain value corresponding to the signals;
assigning means for assigning standard values for information which cannot be obtained by the collecting means;
average luminance calculating means for calculating average luminance values from the target region and the nearby regions selected by the selecting means; and
luminance noise amount calculating means for calculating the amount of luminance noise, based on information from the collecting means or assigning means, and the average luminance values.

13. The signal processing system according to Claims 11 or 12, the collecting means further comprising
a temperature sensor for measuring the temperature value of the image pickup device.

14. The signal processing system according to Claims 11 or 12, the collecting means further comprising
gain calculating means for calculating the gain value, based on at least one or more information of ISO sensitivity, exposure information, and white balance information.

15. The signal processing system according to Claim 11, the color noise amount calculating means further comprising:

recording means for recording at least one set or more of parameter groups constructed of a reference color noise model corresponding to a predetermined hue, and a correction coefficient;
parameter selecting means for selecting a necessary parameter from the parameter group, based on information from the collecting means or the assigning means, and the average color difference value;
interpolation means for obtaining reference color noise amount by interpolation computation based on the average color difference value and a reference color noise model from a parameter group selected by the parameter selecting means; and
correcting means for obtaining the color noise amount by correcting the reference color noise amount based on a correction coefficient from the parameter group selected by the parameter selecting means.

16. The signal processing system according to Claim 15, wherein the reference color noise model is configured of a plurality of coordinate point data constructed of color noise amount as to color difference value.

17. The signal processing system according to Claim 11, the color noise amount calculating means further comprising look-up table means for obtaining color noise amount by inputting the information from the collecting means or the assigning means, and the average color difference value.

18. The signal processing system according to Claim 12, the luminance noise amount calculating means further comprising:

recording means for recording a parameter group constructed of a reference luminance noise model and a correction coefficient;
parameter selecting means for selecting a necessary parameter from the parameter group, based on information from the collecting means or the assigning means, and the average luminance value;
interpolation means for obtaining reference luminance noise amount by interpolation computation based on the average luminance value and a reference luminance noise model from a parameter group selected by the parameter selecting means; and
correcting means for obtaining the luminance noise amount by correcting the reference luminance noise based on a correction coefficient from the parameter group selected by the parameter selecting means.

19. The signal processing system according to Claim 18, wherein the reference luminance noise model is configured of a plurality of coordinate point data constructed of luminance noise amount as to luminance value.

20. The signal processing system according to Claim 12, the luminance noise amount calculating means further comprising
look-up table means for obtaining luminance noise amount by inputting the information from the collecting means or the assigning means, and the average luminance value.

21. The signal processing system according to Claim 1, the noise reduction means comprising
at least one of color noise reduction means for reducing color noise from the target region based on the noise amount, and luminance noise reduction means for reducing luminance noise from the target region based on the noise amount.

22. The signal processing system according to Claim 21, the color noise reduction means further comprising:

setting means for setting a noise range in the target region, based on the noise amount from the noise estimating means;
first smoothing means for smoothing color difference signals of the target region in the case of belonging to the noise range; and
second smoothing means for correcting color difference signals of the target region in the case of not belonging to the noise range.

23. The signal processing system according to Claim 21, the luminance noise reduction means further comprising:

setting means for setting a noise range in the target region, based on the luminance noise amount from the noise estimating means;
first smoothing means for smoothing luminance signals of the target region in the case of belonging to the noise range; and
second smoothing means for correcting luminance signals of the target region in the case of not belonging to the noise range.

24. A signal processing program for causing a computer to execute
extraction processing for extracting a local region from signals of an image pickup device in front of which is arranged a color filter, the local region is constructed of a target region which noise reduction processing is performed, and at least one or more nearby regions which exist neighborhood of the target region;
separation processing for calculating luminance signals and color difference signals for each of the target region and the nearby regions;
selection processing for selecting the nearby regions similar to the target region;
noise estimation processing for estimating the amount of noise from the target region and selected nearby regions; and
noise reduction processing for reducing noise in the target region based on the amount of noise.

**25.** The signal processing program according to Claim 24, the selection processing comprising:

hue calculation processing for calculating hue signals for each of the target region and the nearby regions;
similarity determination processing for determining a similarity of the target region and the nearby regions based on at least one of the luminance signals and the hue signals; and
nearby region selection processing for selecting the nearby regions based on the similarity.

**26.** The signal processing program according to Claim 24, the selection processing comprising:

hue calculation processing for calculating hue signals for each of the target region and the nearby regions;
edge calculating processing for calculating edge signals for each of the target region and the nearby regions;
similarity determination processing for determining a similarity of the target region and the nearby regions based on at least one of the luminance signals and the hue signals and the edge signals; and
nearby region selection processing for selecting the nearby regions based on the similarity.

**27.** The signal processing program according to Claim 24, the selection processing comprising:

hue calculation processing for calculating hue signals for each of the target region and the nearby regions;
frequency calculation processing for calculating frequency signals for each of the target region and the nearby regions;
similarity determination processing for determining a similarity of the target region and the nearby regions based on at least one of the luminance signals and the hue signals and the frequency signals; and
nearby region selection processing for selecting the nearby regions based on the similarity.

**28.** The signal processing program according to Claim 24, the selection processing comprising
control processing for controlling such that the nearby regions used by the noise estimation processing and the noise reduction processing differ.

**29.** The signal processing program according to Claim 24, the noise estimation processing comprising
at least one of color noise estimation processing for estimating the amount of color noise from the target region and the nearby regions selected in the selection processing, and luminance noise estimation processing for estimating the amount of luminance noise from the target region and the nearby regions selected in the selection processing.

**30.** The signal processing program according to Claim 29, the color noise estimation processing comprising:

collection processing for collecting information relating to temperature value of the image pickup device and gain value corresponding to the signals;
assignment processing for assigning standard values for information which cannot be obtained by the collection processing;
average color difference calculation processing for calculating average color difference values from the target region and the nearby regions selected in the selection processing; and
color noise amount calculation processing for calculating the amount of color noise, based on the information from the collection processing or assignment processing, and the average color difference values.

**31.** The signal processing program according to Claim 29, the luminance noise estimation processing comprising:

collection processing for collecting information relating to temperature values of the image pickup device and gain value corresponding to the signals;
assignment processing for assigning standard values for information which cannot be obtained by the collection processing;
average luminance calculation processing for calculating average luminance values from the target region and the nearby regions selected in the selection processing; and

luminance noise amount calculation processing for calculating the amount of luminance noise, based on the information from the collection processing or assignment processing, and the average luminance values.

**32.** The signal processing program according to Claim 30, the color noise amount calculation processing comprising:

record processing for recording at least one or more of parameter groups constructed of a reference color noise model corresponding to a predetermined hue, and a correction coefficient;
parameter selection processing for selecting a necessary parameter from the parameter group, based on information from the collection processing or the assignment processing, and the average color difference value;
interpolation processing for obtaining reference color noise amount by interpolation computation based on the average color difference value and a reference color noise model from a parameter group selected by the parameter selection processing; and
correction processing for obtaining the color noise amount by correcting the reference color noise based on a correction coefficient from the parameter group selected by the parameter selection processing.

**33.** The signal processing program according to Claim 30, the color noise amount calculation processing comprising look-up table processing for obtaining color noise amount by inputting the information from the collection processing or the assignment processing, and the average color difference value.

**34.** The signal processing program according to Claim 31, the luminance noise amount calculation processing comprising:

record processing for recording a parameter group constructed of a reference luminance noise model and a correction coefficient;
parameter selection processing for selecting a necessary parameter from the parameter group, based on information from the collection processing or the assignment processing, and the average luminance value;
interpolation processing for obtaining reference luminance noise amount by interpolation computation based on the average luminance value and a reference luminance noise model from a parameter group selected in the parameter selection processing; and
correction processing for obtaining the luminance noise amount by correcting the reference luminance noise amount based on a correction coefficient from the parameter group selected in the parameter selection processing.

**35.** The signal processing program according to Claim 31, the luminance noise amount calculation processing comprising look-up table processing for obtaining luminance noise amount by inputting the information from the collection processing or the assignment processing, and the average luminance value.

**36.** The signal processing program according to Claim 24, the noise reduction processing comprising at least one of color noise reduction processing for reducing color noise from the target region based on the noise amount, and luminance noise reduction processing for reducing luminance noise from the target region based on the noise amount.

**37.** The signal processing program according to Claim 36, the color noise reduction processing comprising:

setting means for setting a noise range in the target region, based on the noise amount from the noise estimation processing;
first smoothness processing for performing smoothing regarding color difference signals of the target region in the case of belonging to the noise range; and
second smoothness processing for performing correction regarding color difference signals of the target region in the case of not belonging to the noise range.

**38.** The signal processing program according to Claim 36, the luminance noise reduction processing comprising:

set processing for setting a noise range in the target region, based on the luminance noise amount from the noise estimation processing;
first smoothness processing for performing smoothing regarding luminance signals of the target region in the case of belonging to the noise range; and
second smoothness processing for performing correction regarding luminance signals of the target region in the case of not belonging to the noise range.

# FIG.1

**LENS SYSTEM 100**

*102* LOW-PASS FILTER
*103* CCD
*121* TEMPERATURE SENSOR

*101* APERTURE
*111* A/F MOTOR

*104* *105* *106* *107*

CDS → GAIN → A/D → BUFFER → EXTRACTING UNIT → Y/C SEPARATING UNIT

*112* EXTRACTING UNIT
*113* Y/C SEPARATING UNIT

IMAGE SIGNALS
CONTROL SIGNALS
OTHER SIGNALS

PRE WB UNIT *108*
EXPOSURE CONTROL UNIT *109*
FOCUS CONTROL UNIT *110*

SELECTING UNIT *114*
NOISE REDUCTION UNIT *116*
SIGNAL PROCESSING UNIT *117*
OUTPUT UNIT *118*

NOISE ESTIMATING UNIT *115*

CONTROL UNIT *119*

EXTERNAL I/F UNIT *120*

EP 1 764 738 A1

28

# FIG.2A

# FIG.2B

$$Y_0 = (G_{32}+G_{23})/2$$
$$Cb_0 = (G_{32}+G_{23})/2-B_{33}$$
$$Cr_0 = (G_{32}+G_{23})/2-R_{22}$$

# FIG.2C

# FIG.2D

# FIG.3

Legend:
- —— IMAGE SIGNALS
- —— CONTROL SIGNALS
- ·········· OTHER SIGNALS

*114* SELECTING UNIT

*112* EXTRACTING UNIT

*200* MINUTE FLUCTUATION ELIMINATION UNIT

*201* BUFFER 1

*202* GRADIENT CALCULATING UNIT

*203* HUE CALCULATING UNIT

*204* HUE CLASS ROM

*113* Y/C SEPARATING UNIT

*205* BUFFER 2

*206* SIMILARITY DETERMINING UNIT

*207* NEARBY REGION SELECTING UNIT

*208* COEFFICIENT CALCULATING UNIT

*119* CONTROL UNIT

*116* NOISE REDUCTION UNIT

*115* NOISE ESTIMATING UNIT

EP 1 764 738 A1

# FIG.4A

## FIG.4B

SIGNAL VALUE (I)

$I_B$ (A)  $I_G$ (A)  $I_R$ (A)

$I_R$ (A) = $I_G$ (A) = $I_B$ (A) → CLASS 0

$I_R$ (B)

$I_R$ (B) > $I_G$ (B) = $I_B$ (B) → CLASS 4

$I_B$ (B)  $I_G$ (B)

SPECTRUM

B    G    R

(A) WHITE

(B) RED

EP 1 764 738 A1

# FIG.4C

# FIG.4D

34

# FIG.5

———— IMAGE SIGNALS

———— CONTROL SIGNALS

‑‑‑‑‑‑‑‑‑ OTHER SIGNALS

*115* NOISE ESTIMATING UNIT

*114*

| SELECTING UNIT |

*300*

| BUFFER |

*301*

| AVERAGE CALCULATING UNIT |

*302*

| GAIN CALCULATING UNIT |

*119*

| CONTROL UNIT |

*303*

| STANDARD VALUE ASSIGNING UNIT |

*305*

| PARAMETER SELECTING UNIT |

*304*

| PARAMETER ROM |

*306*

| INTERPOLATION UNIT |

*307*

| CORRECTING UNIT |

*116*

| NOISE REDUCTION UNIT |

## FIG.6A

NOISE AMOUNT (N)

$Ns = \alpha_{sgt} L^2 + \beta_{sgt} L + \gamma_{sgt}$

ISO 400 (GAIN×4)  s = SIGNAL (Y, Cb, Cr)

ISO 200 (GAIN×2)  g = GAIN (1, 2, 4)

ISO 100 (GAIN×1)  t = TEMPERATURE (20,50, 80)

SIGNAL LEVEL (L)

## FIG.6B

NOISE AMOUNT (N)

$(L_{n+1}, N_{n+1})$

$(L_n, N_n)$

CORRECTION COEFFICIENT $k_{sgt}$

SIGNAL LEVEL (L)

## FIG.6C

NOISE AMOUNT (N)

$(L_{n+1}, N_{n+1})$

$(L_n, N_n)$

$N_{n+1}$

$N\ell$

$N_n$

$N_s$

$$N\ell = \frac{L_{n+1} - N_n}{L_{n+1} - L_n} (\ell - L_n) + N_n$$

$N_s = k_{sgt} \cdot N\ell$

$\ell$

SIGNAL LEVEL (L)

EP 1 764 738 A1

# FIG.6D

# FIG.7

EP 1 764 738 A1

— IMAGE SIGNALS

— CONTROL SIGNALS

------ OTHER SIGNALS

*116* NOISE REDUCTION UNIT

*115* NOISE ESTIMATING UNIT

*400* RANGE SETTING UNIT

*402* FIST SMOOTHING UNIT

*401* SWITCHING UNIT

*403* SECOND SMOOTHING UNIT

SELECTING UNIT

*114*

*119* CONTROL UNIT

*117* SIGNAL PROCESSING UNIT

# FIG.8

——— IMAGE SIGNALS

——— CONTROL SIGNALS

········ OTHER SIGNALS

*500* INPUT UNIT → *107* BUFFER → *112* EXTRACTING UNIT → *113* Y/C SEPARATING UNIT

*501* HEADER INFORMATION ANALYSIS UNIT

*114* SELECTING UNIT → *116* NOISE REDUCTION UNIT → *117* SIGNAL PROCESSING UNIT → *118* OUTPUT UNIT

*115* NOISE ESTIMATING UNIT

CONTROL UNIT *119*

EXTERNAL I/F UNIT *120*

EP 1 764 738 A1

# FIG.9

START

S1 — INPUT SIGNALS, HEADER INFORMATION

S2 — EXTRACT LOCAL REGION → Y/C SEPARATION — S3

S4 — CALCULATE HUE

S5 — DETERMINE SIMILARITY

S6 — CALCULATE WEIGHTING COEFFICIENT

SELECT NEARBY REGIONS — S7

CALCULATE AVERAGE VALUE — S8

S9 — SET NOISE-RELATED INFORMATION

S10 — READ IN NOISE MODEL

S11 — INTERPOLATION

S12 — CORRECTION

S13 — BELONG TO NOISE RANGE

YES → S14 — FIRST SMOOTHING

NO → SECOND SMOOTHING — S15

S16 — ALL LOCAL REGIONS ENDED

NO

YES

S17 — SIGNAL PROCESSING

S18 — SIGNAL OUTPUT

END

# FIG.10

LENS SYSTEM **100**

**102** LOW-PASS FILTER
**103** CCD
**121** TEMPERATURE SENSOR

**101** APERTURE

**111** A/F MOTOR

**104** **105** **106** **107**

CDS → GAIN → A/D → BUFFER → **112** EXTRACTING UNIT → **113** Y/C SEPARATING UNIT

— IMAGE SIGNALS
— CONTROL SIGNALS
······ OTHER SIGNALS

**108** PRE WB UNIT

**109** EXPOSURE CONTROL UNIT

**110** FOCUS CONTROL UNIT

**114** SELECTING UNIT

**115** NOISE ESTIMATING UNIT

**116** NOISE REDUCTION UNIT

**117** SIGNAL PROCESSING UNIT

**118** OUTPUT UNIT

**119** CONTROL UNIT

**120** EXTERNAL I/F UNIT

EP 1 764 738 A1

# FIG.11A

NEARBY REGIONS

TARGET REGION

| Cy00 | Ye10 | Cy20 | Ye30 | Cy40 | Ye50 | Cy60 | Ye70 |
|------|------|------|------|------|------|------|------|
| G01 | Mg11 | G21 | Mg31 | G41 | Mg51 | G61 | Mg71 |
| Cy02 | Ye12 | Cy22 | Ye32 | Cy42 | Ye52 | Cy62 | Ye72 |
| Mg03 | G13 | Mg23 | G33 | Mg43 | G53 | Mg63 | G73 |
| Cy04 | Ye14 | Cy24 | Ye34 | Cy44 | Ye54 | Cy64 | Ye74 |
| G05 | Mg15 | G25 | Mg35 | G45 | Mg55 | G65 | Mg75 |
| Cy06 | Ye16 | Cy26 | Ye36 | Cy46 | Ye56 | Cy66 | Ye76 |
| Mg07 | G17 | Mg27 | G37 | Mg47 | G57 | Mg67 | G77 |

# FIG.11B

$$Y = Cy_{44} + Ye_{34} + G_{33} + Mg_{43}$$
$$Cb = (Cy_{44} + Mg_{43}) - (Ye_{34} + G_{33})$$
$$Cr = (Ye_{34} + Mg_{43}) - (Cy_{44} + G_{33})$$

# FIG.11C

**3×3 LAPLACIAN OPERATOR**

$$\begin{bmatrix} -1 & -1 & -1 \\ -1 & 8 & -1 \\ -1 & -1 & -1 \end{bmatrix}$$

# FIG.12

IMAGE SIGNALS
CONTROL SIGNALS
OTHER SIGNALS

114 SELECTING UNIT

113 Y/C SEPARATING UNIT

200 MINUTE FLUCTUATION ELIMINATION UNIT

201 BUFFER 1

203 HUE CALCULATING UNIT

600 EDGE CALCULATING UNIT

205 BUFFER 2

206 SIMILARITY DETERMINING UNIT

207 NEARBY REGION SELECTING UNIT

208 COEFFICIENT CALCULATING UNIT

115 NOISE ESTIMATING UNIT

116 NOISE REDUCTION UNIT

119 CONTROL UNIT

# FIG.13

**Legend:**
- —— IMAGE SIGNALS
- — CONTROL SIGNALS
- ------- OTHER SIGNALS

*114* SELECTING UNIT

*200* MINUTE FLUCTUATION ELIMINATION UNIT

*201* BUFFER 1

*203* HUE CALCULATING UNIT

*700* DCT CONVERSION UNIT

*113* Y/C SEPARATING UNIT

*205* BUFFER 2

*206* SIMILARITY DETERMINING UNIT

*207* NEARBY REGION SELECTING UNIT

*208* COEFFICIENT CALCULATING UNIT

*119* CONTROL UNIT

*116* NOISE REDUCTION UNIT

*115* NOISE ESTIMATING UNIT

EP 1 764 738 A1

EP 1 764 738 A1

# FIG.14

—— IMAGE SIGNALS
—— CONTROL SIGNALS
-------- OTHER SIGNALS

*115* NOISE ESTIMATING UNIT

*114*

SELECTING UNIT

*300*

BUFFER

*301*

AVERAGE CALCULATING UNIT

*302*

GAIN CALCULATING UNIT

*119*

CONTROL UNIT

*303*

STANDARD VALUE ASSIGNING UNIT

*800*

LOOK-UP TABLE UNIT

*116*

NOISE REDUCTION UNIT

46

# FIG.15

START

S1 — INPUT SIGNALS, HEADER INFORMATION

S2 — EXTRACT LOCAL REGION

S3 — Y/C SEPARATION

S4 — CALCULATE HUE | CALCULATE EDGE — S20

S5 — DETERMINE SIMILARITY

S6 — CALCULATE WEIGHTING COEFFICIENT | SELECT NEARBY REGIONS — S7

CALCULATE AVERAGE VALUE — S8

S9 — SET NOISE-RELATED INFORMATION

S21 — READ IN NOISE TABLE

S13 — BELONG TO NOISE RANGE

YES | NO

S14 — FIRST SMOOTHING | SECOND SMOOTHING — S15

S16 — ALL LOCAL REGIONS ENDED

NO

YES

S17 — SIGNAL PROCESSING

S18 — SIGNAL OUTPUT

END

<table>
<tr><td colspan="2">**INTERNATIONAL SEARCH REPORT**</td><td>International application No.<br>PCT/JP2005/012478</td></tr>
</table>

| | |
|---|---|
| A. CLASSIFICATION OF SUBJECT MATTER<br>*G06T5/00* (2006.01), *H04N5/21* (2006.01), *H04N9/07* (2006.01) | |

According to International Patent Classification (IPC) or to both national classification and IPC

B. FIELDS SEARCHED

Minimum documentation searched (classification system followed by classification symbols)
*G06T5/00* (2006.01), *H04N5/21* (2006.01), *H04N9/07* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-128985 A (Olympus Corp.),<br>22 April, 2004 (22.04.04),<br>Full text; Figs. 1 to 15<br>& WO 2004/032486 A1 | 1-38 |
| A | JP 2001-157057 A (Konica Corp.),<br>08 June, 2001 (08.06.01),<br>Full text; Figs. 1 to 18<br>(Family: none) | 1-38 |
| A | JP 2001-175843 A (Canon Inc.),<br>29 June, 2001 (29.06.01),<br>Full text; Figs. 1 to 14<br>& US 2001/52971 A1 | 1-38 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>05 October, 2005 (05.10.05) | Date of mailing of the international search report<br>25 October, 2005 (25.10.05) |
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001157057 A

- JP 2001175843 A